# EUROPEAN PATENT APPLICATION

(11) **EP 4 811 733 A1**
(43) Date of publication of application: **23.09.2026**
(21) Application number: 24907872.6
(22) Date of filing: 29.11.2024
(51) Int. Cl.: H04L 27/26, H04L 25/02

(54) **APPARATUS, METHOD, AND STORAGE MEDIUM FOR RECEIVING SIGNALS IN WIRELESS COMMUNICATION SYSTEM**

(30) Priority: 22.12.2023 KR 20230190444
(71) Applicant: Samsung Electronics Co., Ltd., Suwon-si, Gyeonggi-do 16677 (KR)
(72) Inventor: SEO, Juhwan, Suwon-si Gyeonggi-do 16677 (KR); KIM, Kyeongyeon, Suwon-si Gyeonggi-do 16677 (KR); CHOI, Sangwon, Suwon-si Gyeonggi-do 16677 (KR)
(74) Representative: HGF
(86) International application number: PCT/KR2024/019363
(87) International publication number: WO 2025/135587

(57) **Abstract**

A DU apparatus may comprise at least one processor and a memory for storing instructions. The instructions, when executed individually or collectively by the at least one processor, cause the apparatus to: acquire a first scalar value and a first vector value of a first weight value on the basis of channel estimation of a reference signal received on a first resource element (RE); acquire a second scalar value and a second vector value of a second weight value on the basis of channel estimation of a reference signal received on a second RE located on a time resource of the first RE; acquire a third scalar value and a third vector value of a third weight value for a data signal received on a third RE between the first RE and the second RE; and decode the data signal received on the third RE by using the third weight value.

## Description

### [Technical Field]

The following descriptions relate to a wireless communication system, and more particularly, to a device, a method, and a storage medium for receiving a signal in the wireless communication system.

### [Background Art]

In order to improve transmission and reception performance of a signal, a plurality of antenna elements may be used. For example, technology used by the plurality of antenna elements may include single-input multiple-output (SIMO) technology, multiple-input single-output (MISO), and multiple-input multiple-output (MIMO) technology. A channel capacity of a wireless communication system using the technology using the plurality of antenna elements may be greatly improved compared to a single antenna technique.

### [Disclosure]

### [Technical Solution]

A device of a distributed unit (DU) may comprise memory storing instructions. The device may comprise at least one processor. The instructions, when executed by the at least one processor individually or collectively, may cause the device to obtain a first scalar value and a first vector value of a first weight value based on channel estimation for a reception reference signal of a first resource element (RE). The instructions, when executed by the at least one processor individually or collectively, may cause the device to obtain a second scalar value and a second vector value of a second weight value based on channel estimation for a reception reference signal of a second RE located on a time resource of the first RE. The instructions, when executed by the at least one processor individually or collectively, may cause the device to obtain a third scalar value and a third vector value of a third weight value for a reception data signal of a third RE between the first RE and the second RE. The third scalar value may be interpolated from the first scalar value and the second scalar value. The third vector value may be interpolated from the first vector value and the second vector value. The instructions, when executed by the at least one processor individually or collectively, may cause the device to perform decoding for the reception data signal of the third RE using the third weight value.

A method performed by a distributed unit (DU) may comprise obtaining a first scalar value and a first vector value of a first weight value based on channel estimation for a reception reference signal of a first resource element (RE). The method may comprise obtaining a second scalar value and a second vector value of a second weight value based on channel estimation for a reception reference signal of a second RE located on a time resource of the first RE. The method may comprise obtaining a third scalar value and a third vector value of a third weight value for a reception data signal of a third RE between the first RE and the second RE. The third scalar value may be interpolated from the first scalar value and the second scalar value. The third vector value may be interpolated from the first vector value and the second vector value. The method may comprise performing decoding for the reception data signal of the third RE using the third weight value.

A non-transitory computer-readable storage medium may store one or more programs including instructions that, when executed by at least one processor of a distributed unit (DU) individually or collectively, cause the DU to obtain a first scalar value and a first vector value of a first weight value based on channel estimation for a reception reference signal of a first resource element (RE). The non-transitory computer-readable storage medium may store one or more programs including instructions that, when executed by the at least one processor of the DU individually or collectively, cause the DU to obtain a second scalar value and a second vector value of a second weight value based on channel estimation for a reception reference signal of a second RE located on a time resource of the first RE. The non-transitory computer-readable storage medium may store one or more programs including instructions that, when executed by the at least one processor of the DU individually or collectively, cause the DU to obtain a third scalar value and a third vector value of a third weight value for a reception data signal of a third RE between the first RE and the second RE. The third scalar value may be interpolated from the first scalar value and the second scalar value. The third vector value may be interpolated from the first vector value and the second vector value. The non-transitory computer-readable storage medium may store one or more programs including instructions that, when executed by the at least one processor of the DU individually or collectively, cause the DU to perform decoding for the reception data signal of the third RE using the third weight value.

### [Description of the Drawings]

FIG. 1A illustrates an example of a wireless communication system.
FIG. 1B illustrates an example of a wireless communication system using single-input multiple-output (SIMO).
FIG. 2 illustrates an example of a fronthaul interface.
FIG. 3 illustrates an example of a functional configuration of an electronic device.
FIG. 4 illustrates an example of a resource structure in a time domain and a frequency domain.
FIG. 5 illustrates an example of a demodulation reference signal (DMRS) in a slot.
FIG. 6 illustrates an example of a transmission/reception end of SIMO.
FIG. 7 illustrates an example of a method for calculating a weight value for a reception data signal based on interpolation for weight values for a reception reference signal.
FIG. 8 illustrates an example of an operation flow of a method for obtaining a weight value for a reception data signal based on interpolation for each of a scalar component and a vector component of a weight value.
FIG. 9A illustrates an example of an operation flow of a method for performing interpolation for weight values in a frequency domain.
FIG. 9B illustrates an example of a method for performing interpolation for weight values in a frequency domain.
FIG. 10A illustrates an example of an operation flow of a method for performing interpolation for weight values in a time domain.
FIG. 10B illustrates an example of a method for performing interpolation for weight values in a time domain.
FIG. 11 illustrates an example of a graph representing a bit error rate (BER) in accordance with a method for calculating a weight value.
FIG. 12 illustrates an example of an operation flow of a method for obtaining a weight value for a reception data signal based on interpolation for a scalar component and a vector component of each of weight values, and performing decoding of the reception data signal.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., a packet, a message, a signal, information, or signaling), a term referring to a resource (e.g., a section, a symbol, a slot, a subframe, a radio frame, a subcarrier, a resource element (RE), a resource block (RB), a bandwidth part (BWP), or an occasion), a term for an operation state (e.g., a step, an operation, or a procedure), a term referring to data (e.g., a packet, a message, a user stream, information, a bit, a symbol, or a codeword), a term referring to a channel, a term referring to network entities (e.g., a distributed unit (DU), a radio unit (RU), a central unit (CU), a CU-control plane (CP), a CU-user plane (UP), an open radio access network (O-RAN) DU (O-DU), an O-RAN RU (O-RU), an O-RAN CU (O-CU), an O-RAN CU-CP (O-CU-UP), and an O-RAN CU-CP (O-CU-CP)), a term referring to a component of a device, and the like used in the following descriptions are exemplified for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes embodiments using terms used in some communication standards (e.g., 3rd Generation Partnership Project (3GPP)), but this is only an example for description. The embodiments of the present disclosure may be applied to other communication and broadcasting systems.

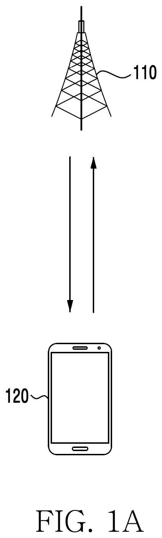

FIG. 1A illustrates an example of a wireless communication system.

Referring to FIG. 1A, FIG. 1A illustrates a base station 110 and a terminal 120 as a portion of nodes that utilize a wireless channel in a wireless communication system. FIG. 1A illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1A, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1A describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

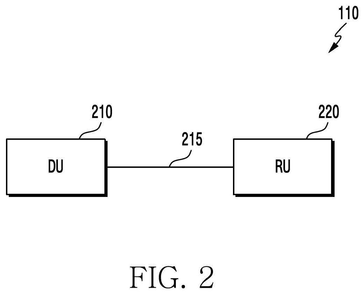

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations becomes smaller, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIG. 2.

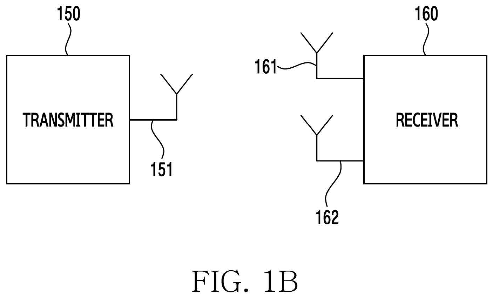

FIG. 1B illustrates an example of a wireless communication system using single-input multiple-output (SIMO).

FIG. 1B illustrates an example of a transmitter 150 and a receiver 160 in a wireless communication system using SIMO. For example, the transmitter 150 may be the terminal 120 of FIG. 1A, and the receiver 160 may be the base station 110 of FIG. 1A. For example, the transmitter 150 may be the base station 110 of FIG. 1A, and the receiver 160 may be the terminal 120 of FIG. 1A. However, an embodiment of the present disclosure is not limited thereto.

Referring to FIG. 1B, in the wireless communication system using the SIMO, the transmitter 150 may include an antenna 151. For example, the antenna 151 may be referred to as a transmission antenna. In addition, in the wireless communication system, the receiver 160 may include a plurality of antennas 161 and 162. For example, each of the antennas 161 and 162 may be referred to as a reception antenna.

For example, the SIMO may be referred to as receiver diversity. For example, the receiver 160 may obtain, through the antennas 161 and 162, a signal (or a transmission signal) transmitted through the antenna 151 of the transmitter 150. For example, the receiver 160 may receive a first signal (or a first reception signal) through the antenna 161, and may receive a second signal (or a second reception signal) through the antenna 162. For example, the receiver 160 may use a reception signal having better quality among the first reception signal and the second reception signal. In FIG. 1B, the receiver 160 is exemplified as including two antennas 161 and 162, but an embodiment of the present disclosure is not limited thereto. For example, the receiver 160 may include three or more antennas.

Hereinafter, the present disclosure is described based on the receiver 160 of the wireless communication system using the SIMO, but an embodiment of the present disclosure is not limited thereto. The present disclosure describes embodiments by using terms used in some communication standards (e.g., 3rd Generation Partnership Project (3GPP)), but this is only an example for description. Various embodiments of the present disclosure may be easily modified and applied in another communication and broadcasting system.

FIG. 2 illustrates an example of a fronthaul interface. Unlike a backhaul between a base station and a core network, the fronthaul refers to a connection between entities between a wireless LAN and a base station.

FIG. 2 illustrates an example of a fronthaul structure between one DU 210 and one RU 220, but this is only for convenience of explanation and the present disclosure is not limited thereto. In other words, an embodiment of the present disclosure may also be applied to a fronthaul structure between one DU and a plurality of RU. For example, an embodiment of the present disclosure may be applied to a fronthaul structure between one DU and two RU. In addition, an embodiment of the present disclosure may also be applied to a fronthaul structure between one DU and three RU.

Referring to FIG. 2, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2 describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. For example, the digital unit (DU) 210 may be implemented separately into a centralized unit (CU) (or control unit (CU)) and a distributed unit (DU). Between a core (e.g., 5G core (5GC) or next generation core (NGC)) network and a radio access network (RAN), the base station may be implemented in a structure in which centralized unit (CU), distributed unit (DU), and radio unit (RU) are arranged in order. An interface between the centralized unit (CU) and the distributed unit (DU) may be referred to as an F1 interface.

A centralized unit (CU) may be in charge of functions of a higher layer than DU, by being connected to DU. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

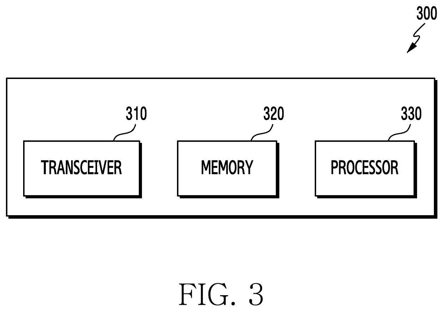

FIG. 3 illustrates an example of a functional configuration of an electronic device.

A configuration of the electronic device exemplified in FIG. 3 may be understood as a configuration of a base station 110, a terminal 120, a DU 210, or an RU 220. Hereinafter, the terms '...unit' and '...er' used below refer to a unit processing at least one function or operation, which may be implemented by hardware or software, or a combination of hardware and software.

Referring to FIG. 3, an electronic device 300 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the electronic device 300. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the electronic device 300. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3, the electronic device 300 may include two or more processors according to another implementation.

For example, the processor 330 may include various processing circuitry and/or a plurality of processors. For example, the term "processor" used in this document, including the claims, may include various processing circuitry including at least one processor, and one or more of the at least one processor may be configured to individually and/or collectively perform various functions described below. As used below, in a case that "processor", "at least one processor", and "one or more processors" are described as being configured to perform various functions, these terms are not limited thereto and encompass situations in which one processor performs a portion of cited functions and another processor (or processors) performs another portion of the cited functions, and also situations in which one processor is capable of performing all of the cited functions. Additionally, the at least one processor may include a combination of processors that, for example, perform various enumerated/disclosed functions in a distributed manner. The at least one processor may execute program instructions to achieve or perform various functions.

A configuration of the electronic device 300 illustrated in FIG. 3 is only an example, and an example of the electronic device 300 performing the embodiments of the present disclosure is not limited to the configuration illustrated in FIG. 3. In some embodiments, some configurations may be added, deleted, or changed. For example, in a case that the electronic device 300 is an RU, the electronic device 300 may further include a fronthaul transceiver. For example, the fronthaul transceiver may transmit and receive a signal on a fronthaul interface. For example, the fronthaul transceiver may receive a management plane (M-plane) message. For example, the fronthaul transceiver may receive a management plane (S-plane) message. For example, the fronthaul transceiver may receive a control plane (C-plane) message. For example, the fronthaul transceiver may transmit a user plane (U-plane) message. For example, the fronthaul transceiver may receive a U-plane message.

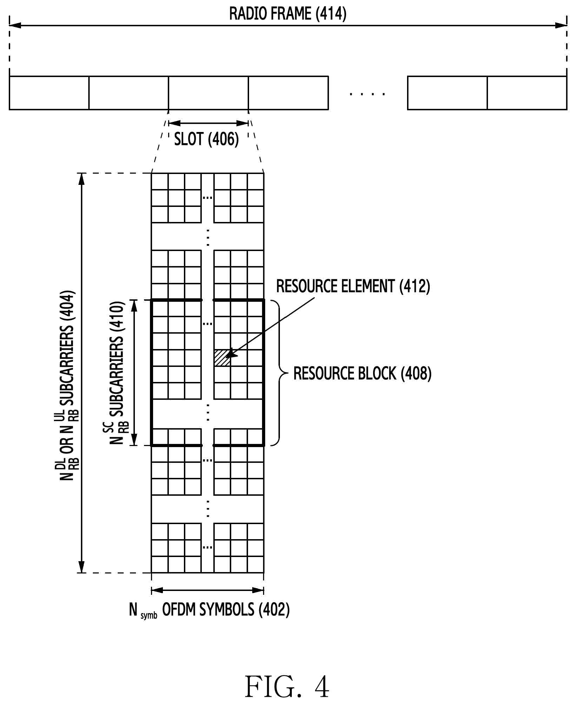

FIG. 4 illustrates an example of a resource structure in a time domain and a frequency domain.

FIG. 4 illustrates a basic structure of a time-frequency domain, which is a radio resource domain in which data or a control channel is transmitted in downlink or uplink.

Referring to FIG. 4, a horizontal axis indicates the time domain and a vertical axis indicates the frequency domain. A minimum transmission unit in the time domain is an orthogonal frequency division multiplexing (OFDM) symbol, and N_{symb} OFDM symbols 402 are gathered to form one slot 406. A length of subframe is defined as 1.0 ms, and a length of a radio frame 414 is defined as 10 ms. A minimum transmission unit in the frequency domain is a subcarrier, and a carrier bandwidth configuring a resource grid may be configured with subcarriers 404 of N^{DL}_{RB} downlink or N^{UL}_{RB} Uplink.

A basic unit of a resource in the time-frequency domain is a resource element (hereinafter referred to as 'RE') 412, and may be indicated as an OFDM symbol index and a subcarrier index. A resource block may include a plurality of resource elements. In an LTE system, a resource block (RB) (or a physical resource block, hereinafter 'PRB') is defined as N_{symb} consecutive OFDM symbols in the time domain and N_{SC}^{RB} consecutive subcarriers in the frequency domain. In an NR system, a resource block (RB) 408 may be defined as N_{SC}^{RB} consecutive subcarriers 410 in the frequency domain. One RB 408 includes N_{SC}^{RB} REs 412 on a frequency axis. In general, a minimum unit of transmission of data is RB and the number of subcarriers is N_{SC}^{RB}=12. The frequency domain may include common resource blocks (CRB). A physical resource block (PRB) may be defined in a bandwidth part (BWP) on the frequency domain. The CRB and PRB numbers may be determined according to a subcarrier spacing. A data rate may increase in proportion to the number of RBs scheduled for a terminal.

In the NR system, a downlink transmission bandwidth and an uplink transmission bandwidth may be different in a case of a frequency division duplex (FDD) system that operates by dividing the downlink and the uplink by a frequency. A channel bandwidth indicates a radio frequency (RF) bandwidth corresponding to a system transmission bandwidth. Table 1 indicates a portion of a correspondence among a system transmission bandwidth, a subcarrier spacing (SCS) and a channel bandwidth defined in the NR system in a frequency band (e.g., a frequency range (FR) 1 (410 MHz to 7125 MHz)) lower than x GHz. Table 2 indicates a portion of a correspondence among a transmission bandwidth, a subcarrier spacing, and a channel bandwidth defined in the NR system in a frequency band (e.g., FR2 (24250 MHz - 52600 MHz) or FR2-2 (52600 MHz to 71,000 MHz)) higher than yGHz. For example, in an NR system having a channel bandwidth of 100 MHz with a subcarrier spacing of 30 kHz, a transmission bandwidth is configured with 273 RBs. In Table 1 and Table 2, N/A may be a bandwidth-subcarrier combination that is not supported in the NR system.

**[Table 1]**

| Chann el bandwidth [MHz] | SCS | 5 | 1 0 | 2 0 | 5 0 | 8 0 | 1 00 |
|---|---|---|---|---|---|---|---|
| Trans mission bandwidth configuration N_{RB} | 15kH z | 2 5 | 5 2 | 1 06 | 2 07 | N /A | N /A |
| | 30kH z | 1 1 | 2 4 | 5 1 | 1 33 | 2 17 | 2 73 |
| | 60kH z | N /A | 1 1 | 2 4 | 6 5 | 1 07 | 1 35 |

**[Table 2]**

| | | | | | |
|---|---|---|---|---|---|
| Chann el bandwidth [MHz ] | SCS | 50 | 100 | 200 | 400 |
| Trans mission bandwidth configuration N_{RB} | 60kHz | 66 | 132 | 264 | N/A |
| | 120k Hz | 32 | 66 | 132 | 264 |

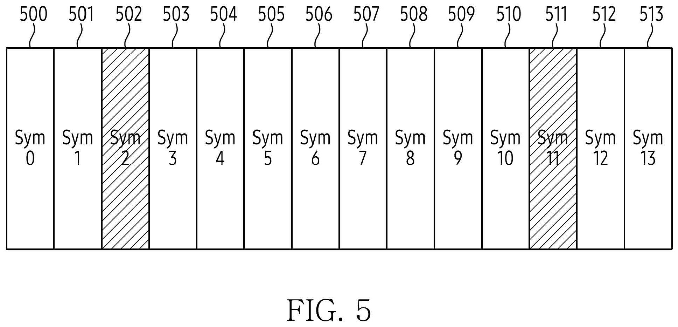

FIG. 5 illustrates an example of a demodulation reference signal (DMRS) in a slot. The DMRS is a reference signal (RS) used to demodulate data. The DMRS may be used to estimate a channel to demodulate data (e.g., PDSCH, or PUSCH) and obtain a result of the channel estimation.

Hereinafter, in order to describe the channel estimation and operations using the DMRS for the channel estimation of the present disclosure, uplink transmission of an NR communication system will be described as an example. However, the embodiments of the present disclosure are not limited to uplink of the NR communication system. It is certain that the embodiments of the present disclosure may also be applied to downlink or another communication system.

Referring to FIG. 5, a base station (e.g., a base station 110) may receive a signal from a terminal (e.g., a terminal 120). The terminal 120 may transmit an uplink signal to the base station 110. The received signal may include data (hereinafter, referred to as reception data) received on an uplink channel (e.g., PUSCH). The reception data may be transmitted in data symbols of a time domain. Also, the received signal may include reference signals (hereinafter referred to as reception reference signals) (e.g., DMRS) for channel estimation and coherent demodulation of the data symbols. The reception reference signals may be transmitted in DMRS symbols of the time domain. The base station 110 may receive the reception data from the terminal 120 in the data symbols of a slot and receive the reception reference signals from the DMRS symbols. The slot may include 14 symbols (e.g., a symbol #0 500, a symbol #1 501, a symbol #2 502, a symbol #3 503, a symbol #4 504, a symbol #5 505, a symbol #6 506, a symbol #7 507, a symbol #8 508, a symbol #9 509, a symbol #10 510, a symbol #11 511, a symbol #12 512, and a symbol #13 513). At least a portion of the 14 symbols may be used to carry DMRS sequences. For example, a section of the symbol #2 502 and a section of the symbol #11 511 may include the DMRS symbols.

The base station 110 may estimate a channel between the base station 110 and the terminal 120 through the reception reference signals. The base station 110 may obtain information on a channel in which the reception reference signals have experienced. For example, the base station 110 may obtain information on a channel in which the received data has experienced through a relationship between a location where the DMRS symbols of the received reference signals are mapped and locations where the data symbols of the received data are mapped. For example, the base station 110 may obtain the information on the channel in which the received data has experienced by performing interpolation in a frequency domain or interpolation in the time domain based on the information on the channel in which the received reference signals have experienced. However, since the number of data symbols in one slot, which is a transmission unit, is generally greater than the number of DMRS symbols, an operation of estimating a channel in which each of the data symbols has experienced may require a large amount of computation. In addition, since a calculation of the DMRS symbols themselves or inter-cell interference is not reflected, reception performance may not be guaranteed. To this end, the base station 110, which is a receiving end, may utilize various reception techniques.

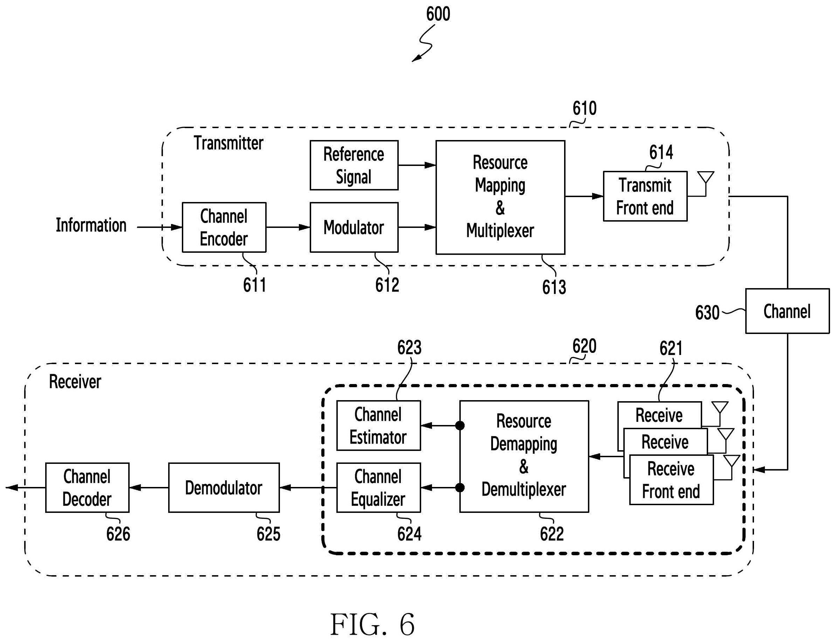

FIG. 6 illustrates an example of a transmission/reception end of SIMO.

Referring to FIG. 6, a communication system 600 (e.g., a wired and wireless communication system, or a broadcasting system) for supporting SIMO may include a transmission end 610 and a reception end 620 as a portion of an electronic device or nodes using a channel 630 (e.g., a wired or wireless channel, or a channel in which wired and wireless are combined). Hereinafter, in the present disclosure, the transmission end 610 and the reception end 620 may be referred to as a transmitter or a receiver, respectively. For example, the transmission end 610 of FIG. 6 may be an example of the transmitter 150 of FIG. 1B. For example, the reception end 620 of FIG. 6 may be an example of the receiver 160 of FIG. 1B.

Each of the transmission end 610 and the reception end 620 of FIG. 6 may be included in an electronic device 300. For example, in a case that the transmission end 610 is included in the terminal 120 of FIG. 1A, the reception end 620 may be included in the base station 110 of FIG. 1A. For example, in a case that the transmission end 610 is included in the terminal 120 of FIG. 1A, the reception end 620 may be included in the DU 210 of FIG. 2 (or, the RU 220, the DU 210, and the RU 220). However, an embodiment of the present disclosure is not limited thereto.

According to an embodiment, the transmission end 610 and the reception end 620 may be included in different electronic devices in accordance with a link formed between communication nodes. For example, the transmission end 610 may be the base station 110, and the reception end 620 may be the terminal 120. In addition, the reception end 620 may be the base station 110, and the transmission end 610 may be the terminal 120. For example, the transmission end 610 or the reception end 620 may be included in the base station 110 including a digital unit (DU) (e.g., the DU 210 of FIG. 2) and a radio unit (RU) (e.g., the RU 220 of FIG. 2). For example, at least a portion of a signal processing operation of the transmission end 610 or the reception end 620 may be performed in the DU of the base station 110.

Hereinafter, although a subject transmitting a signal is described as the transmission end 610 and a subject receiving a signal is described as the reception end 620, this is merely a functional expression for describing a signal processing procedure and is not to be interpreted as limiting a specific embodiment. For convenience of description, FIG. 6 exemplifies the communication system 600 in which the transmission end 610 and the reception end 620 are implemented as different electronic devices or nodes. However, the transmission end 610 and the reception end 620 may be included in one electronic device.

According to an embodiment, the transmission end 610 may perform conversion between a baseband signal and a bit stream in accordance with a physical layer standard of a system. For example, the transmission end 610 may generate a codeword by encoding information bits based on at least one channel encoder 611. The transmission end 610 may generate complex symbols through a modulator 612 based on the encoded codeword. The transmission end 610 may process, through a resource mapper and multiplexer 613, a reference signal known by the transmission end 610 together with the complex symbols. For example, the transmission end 610 may perform time/space/frequency resource mapping for the complex symbols and the reference signal, and may perform multiplexing using an orthogonal frequency division multiple access (OFDM)/discrete Fourier transform-spread-OFDM (DFT-s-OFDM)/ code division multiple access (CDMA) method, and the like. The transmission end 610 may transmit a signal processed through a transmission front end 614. For example, in the communication system 600 supporting the SIMO, the transmission front end 614 of the transmission end 610 may include a transmission antenna. For example, the transmission end 610 may up-convert a baseband signal into a radio frequency (RF) signal and then transmit the RF signal through an antenna. As the transmitted RF signal passes through the channel 630, it may be affected by damage, or gain decrease, and the like due to background noise, interference, fading, and the like.

According to an embodiment, the reception end 620 may receive, through a reception front end 621, an RF signal transmitted from the transmission end 610 and passing through the channel 630. For example, in the communication system 600 supporting the SIMO, the reception front end 621 of the reception end 620 may include a plurality of reception antennas. For example, the RF signal may be received through an antenna after passing through the channel 630. The RF signal may be down-converted into a baseband signal. The reception end 620 may process the baseband signal through a resource demapping and demultiplexer 622. For example, the reception end 620 may distinguish the baseband signal into a reference signal and a data signal by demultiplexing and demapping the baseband signal. The baseband signal may be referred to as a reception signal received by the reception end 620. The reference signal and the data signal identified by being demultiplexed and demapped from the reception signal may be referred to as a reception reference signal and a reception data signal, respectively. The reception end 620 may estimate the channel 630 from the reference signal through a channel estimator 623. The reception end 620 may perform equalization through a channel equalizer 624 based on information on the channel estimation and the data signal. The reception end 620 may estimate or restore a bit stream transmitted by demodulating and decoding through a demodulator 625 and a channel decoder 626.

Hereinafter, in a process of describing the present invention in detail, the following mathematical symbols are used.
- In the present disclosure, unless otherwise mentioned, it is assumed that an index of a first element of a set, a sequence, and a vector starts from 0 (zero-based numbering).
- A boldface lowercase letter (e.g., a) is used to represent a vector, and a boldface uppercase letter (e.g., A) is used to represent a matrix. In a case of a vector, unless otherwise mentioned, it represents a column vector. At this time, a vector aᵢ represents a *l* th column vector of a matrix A.
- For a vector a and the matrix A ,a*^{H}* and *A*^{H} represent a complex transpose thereof, respectively.

Hereinafter, for convenience of description, it is assumed an example in which the transmission end 610 transmits a physical uplink shared channel (PUSCH). For example, the transmission end 610 may transmit, on the PUSCH, a signal including a data signal and a reference signal. For example, the reference signal may include the DMRS exemplified in FIG. 5. The reception end 620 may receive the signal on the PUSCH. At this time, the signal received at the reception end 620 may be referred to as a reception signal. The data signal in the reception signal may be referred to as a reception data signal, and the reference signal in the reception signal may be referred to as a reception reference signal.

For example, the reception end 620 may obtain the reception signal through Nᵣₓ reception antennas (e.g., reception antennas in the reception front end 621) and N_{layer} layers. The following equation may be referred to for the reception signal obtained at a specific time resource (e.g., an l-th symbol) and a specific frequency resource (e.g., a k-th subcarrier). $y \left(l, k\right) = H \left(l, k\right) x \left(l, k\right) + n \left(l, k\right)$

The 1 may indicate an index of a symbol, the k may indicate an index of a subcarrier, the y(*l*, *k*) may indicate a reception signal vector of the l-th symbol and the k-th subcarrier having a size of (*Nᵣₓ* × 1), the H(*l*, *k*) may indicate a channel matrix of the l-th symbol and the k-th subcarrier having a size of (*Nᵣₓ* × *N_{layer}*), the x(*l*, *k*) may indicate a transmission signal vector of the l-th symbol and the k-th subcarrier having a size of (*N_{layer}* × 1), and the n(*l*, *k*) may indicate a noise and interference vector of the l-th symbol and the k-th subcarrier having a size of (*Nᵣₓ* × 1).

In order to maximize (or increase) an SINR of the reception signal, by inversely compensating for a signal magnitude change caused by a channel and a minimum mean square error (MMSE) weight (hereinafter, weight) in an i-th layer, a transmission signal estimated at the reception end 620 is as shown in the following equation. $\begin{matrix}{\left[\hat{x}\left(l, k\right)\right]}_{i} = \frac{1}{β \left(l, k\right)} {\left[W{\left(l, k\right)}^{H}y\left(l, k\right)\right]}_{i} \\ = \frac{1}{β \left(l, k\right)} {\left[{\left({\hat{H}}^{H}\left(l, k\right){R}_{nn}^{- 1}\hat{H}\left(l, k\right)+I\right)}^{- 1}{\hat{H}}^{H}\left(l, k\right){R}_{nn}^{- 1}y\left(l, k\right)\right]}_{i}\end{matrix}$

The [x̂(*l*, *k*)]*ᵢ* may indicate an estimated transmission signal of an i-th layer, the *β*(*l*, *k*) may indicate a diagonal matrix (hereinafter, a gain matrix) indicating a gain of a signal having a size of (*N_{layer}* × *N_{layer}*), the **W**(*l*, *k*) may indicate a weight matrix having a size of (*Nᵣₓ* × *Nᵣₓ*), the y(*l*, *k*) may indicate a reception signal vector having a size of (*Nᵣₓ* × 1), the Ĥ*^{H}*(*l*, *k*) may indicate an estimated channel matrix having a size of (*Nᵣₓ* × *N_{layer}*), the ${R}_{nn}^{- 1}$ may indicate a noise and interference covariance matrix having a size of (*Nᵣₓ* × *Nᵣₓ*), and the I may indicate an identity matrix having a size of (*N_{layer}* × *N_{layer}*). In the example, since the x̂(*l*, *k*) indicates an estimated transmission signal vector having a size of (*N_{layer}* × 1), the [x̂(*l*, *k*)]ᵢ may be a scalar value.

Each element *βᵢᵢ* of the gain matrix *β*(*l, k*) may indicate an estimation for a signal magnitude change with respect to transmission signal *x*(*l, k*) in accordance with a multiplication of a channel and a weight matrix. The element *βᵢᵢ* may be defined as shown in the following equation. ${β}_{ii} \left(l\right) = {\left({W}^{H}\left(l, k\right)\hat{H}\left(l, k\right)\right)}_{ii} = {\left({\left({\hat{H}}^{H}\left(l, k\right){R}_{nn}^{- 1}\hat{H}\left(l, k\right)+I\right)}^{- 1}{\hat{H}}^{H}\left(l, k\right){R}_{nn}^{- 1}\hat{H}\left(l, k\right)\right)}_{ii}$

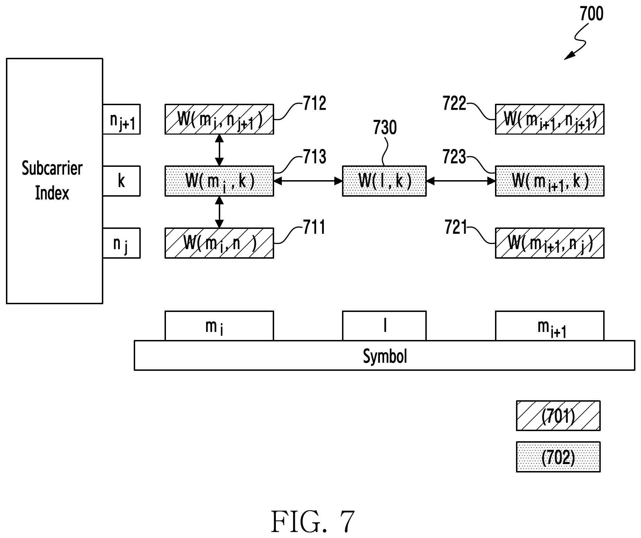

In calculating the estimated transmission signal, the reception end 620 needs to reduce operation complexity for the **W**(*l, k*) and the ***β***(*l*, *k*) in order to reduce complexity of an operation. Instead of calculating the **W**(*l*, *k*) and the ***β***(*l*, *k*) for each of all REs, the reception end 620 may use a method of applying the same weight by grouping REs having similar channels or a method of calculating a weight for sparsely located REs and then performing interpolation. A specific example of the method using the interpolation may be referenced in FIG. 7 below.

FIG. 7 illustrates an example of a method for calculating a weight value for a reception data signal based on interpolation for weight values for a reception reference signal.

FIG. 7 illustrates an example 700 of reception signals obtained by the electronic device 300 including the reception end 620 of FIG. 6 on a time domain and a frequency domain. For example, the reception signals may include the reception reference signal and the reception data signal.

Referring to the example 700, the reception signals may be received (or obtained) on resources. For example, the reception signals may be mapped on (or allocated on) the resources. For example, each of the resources may be an RE. For example, the RE may be defined by a symbol and a subcarrier. For example, the resources to which the reception signals are mapped may include a first resource region 701 in which reception reference signals are received (or obtained, mapped) and a second resource region 702 in which reception data signals are received (or obtained, mapped). For example, the first resource region 701 may include a plurality of REs. For example, the second resource region 702 may include a plurality of REs.

For example, the time domain of the resources on which the reception signals are received may be configured in units of symbols. For example, the time domain may include an mᵢ-th symbol (hereinafter, an mᵢ symbol), an l symbol, and an mᵢ₊₁ symbol. For example, the mᵢ symbol, the l symbol, and the mᵢ₊₁ symbol may indicate symbols that are not continuous with each other. At least one symbol may be located between the mᵢ symbol and the l symbol. At least one symbol may also be located between the l symbol and the mᵢ₊₁ symbol. However, this is merely for convenience of description, and an embodiment of the present disclosure is not limited to the example 700.

In addition, for example, the frequency domain of the resources on which the reception signals are received may be configured in units of subcarriers. For example, the frequency domain may include an nⱼ-th subcarrier (hereinafter, an nⱼ subcarrier), a k subcarrier, and an nⱼ₊₁ subcarrier. For example, the nⱼ subcarrier, the k subcarrier, and the nⱼ₊₁ subcarrier may indicate subcarriers that are not continuous with each other. At least one subcarrier may be located between the nⱼ subcarrier and the k subcarrier. At least one subcarrier may be located between the k subcarrier and the nⱼ₊₁ subcarrier. However, this is merely for convenience of description, and an embodiment of the present disclosure is not limited to the example 700.

Referring to the example 700, the reception reference signals of the reception signals may be received in the first resource region 701. For example, a first reception reference signal may be received in a first RE 711. For example, a second reception reference signal may be received in a second RE 712. For example, a third reception reference signal may be received in a third RE 721. For example, a fourth reception reference signal may be received in a fourth RE 722. For example, each of the REs of the first resource region 701 may be referred to as an RE for a reference signal, or a reference RE.

Referring to the example 700, the reception data signals of the reception signals may be received in the second resource region 702. For example, a first reception data signal may be received in a fifth RE 713. For example, a second reception data signal may be received in a sixth RE 723. For example, a third reception data signal may be received in a seventh RE 730. For example, the fifth RE 713 may be located on a time resource (an mᵢ symbol) of the first RE 711 (or the second RE 712), and may be located on a frequency resource (a k subcarrier) between the first RE 711 and the second RE 712. In addition, for example, the sixth RE 723 may be located on a time resource (an mᵢ₊₁ symbol) of the third RE 721 (or the fourth RE 722), and may be located on a frequency resource (a k subcarrier) between the third RE 721 and the fourth RE 722. For example, the seventh RE 730 may be located on a frequency resource (a k subcarrier) of the fifth RE 713 (or the sixth RE 723), and may be located on a time resource (an l symbol) between the fifth RE 713 and the sixth RE 723. For example, each of the REs of the second resource region 702 may be referred to as an RE for a data signal, or a data RE.

For example, the electronic device 300 needs to obtain weight values (and/or gains) of the REs 713, 723, and 730 in which the reception data signals are received. For example, the electronic device 300 may obtain the weight values for the REs 713, 723, and 730 of the reception data signals in order to perform decoding for the reception data signals. At this time, in a case that the electronic device 300 directly calculates a weight value for each of all REs (e.g., the REs 713, 723, and 730) in which the reception data signals are obtained, complexity of an operation may increase. Therefore, instead of directly calculating a weight value for each of all the REs in which the reception data signals are obtained, the electronic device 300 may use a weight value for each of the REs 711, 712, 721, and 722 in which the reception reference signals are received.

For example, the electronic device 300 may obtain weight values of the REs 713, 723, and 730 of the reception data signals interpolated from weight values of the REs 711, 712, 721, and 722 of the reception reference signals sparsely located. Referring to the example 700, the electronic device 300 may calculate a first weight value **W**(*mᵢ*,*nⱼ*) of the first RE 711, a second weight value **W**(*mᵢ*,*n*_{*j*+1}) of the second RE 712, a third weight value **W**(*m*_{*i*+1},*nⱼ*) of the third RE 721, and a fourth weight value **W**(*m*_{*i*+1},*nⱼ*) of the fourth RE 722.

For example, the electronic device 300 may calculate weight values of the REs 713 and 723 interpolated from weight values of the REs 711, 712, 721, and 722. For example, the electronic device 300 may calculate a fifth weight value **W**(*mᵢ*,*k*) of the fifth RE 713 interpolated from the first weight value **W**(*mᵢ*,*nⱼ*) of the first RE 711 and the second weight value **W**(*mᵢ*,*n*_{*j*+1}) of the second RE 712. For example, the electronic device 300 may calculate a sixth weight value **W**(*m*_{*i*+1},*k*) of the sixth RE 723 interpolated from the third weight value **W**(*m*_{*i*+1},*nⱼ*) of the third RE 721 and the fourth weight value **W**(*m*_{*i*+1},*nⱼ*) of the fourth RE 722. In the example, an example in which a weight of a reception data signal is obtained through frequency interpolation for REs on the same time resource (e.g., the mᵢ symbol or the mᵢ₊₁ symbol) among REs in which reception reference signals are received is illustrated, but an embodiment of the present disclosure is not limited thereto. For example, the electronic device 300 may obtain a weight value of an RE on an l symbol interpolated from the first weight value **W**(*mᵢ*,*nⱼ*) of the first RE 711 and the third weight value **W**(*m*_{*i*+1},*nⱼ*) of the third RE 721. In addition, for example, the electronic device 300 may obtain a weight value of an RE on an l symbol interpolated from the second weight value **W**(*mᵢ*,*n*_{*j*+1}) of the second RE 712 and the fourth weight value **W**(*m*_{*i*+1},*n*_{*j*+1}) of the fourth RE 722.

For example, the electronic device 300 may calculate a weight value of the RE 730 of a reception data signal interpolated from weight values of the REs 713 and 723 of the reception data signals. For example, the electronic device 300 may calculate a seventh weight value **W**(*l,k*) of the seventh RE 730 interpolated from the fifth weight value **W**(*mᵢ*,*k*) of the fifth RE 713 and the sixth weight value **W**(*m*_{*i*+1},*k*) of the sixth RE 723.

As described above, a method using interpolation for a time or a frequency may estimate weight values of all REs in which reception data signals are received with an operation for only some REs, such as REs in which reception reference signals are received, without performing an operation for all REs in which reception data signals are received, and thus may reduce operation complexity of the electronic device 300. However, in relation to the time domain (or a time axis), in an environment in which a channel change in accordance with a time is large, such as an environment in which a Doppler frequency has a relatively high frequency, a loss in decoding performance may be generated in the method using the interpolation. In addition, in relation to the frequency domain (or a frequency axis), in an environment in which a channel change in accordance with a frequency is large, such as an environment in which frequency selectivity has a relatively large value, a loss in decoding performance may be generated in the method using the interpolation.

Similarly, even in a case of a method of applying the same weight to grouped REs, a large error may be generated in accordance with a rapidly changed channel state and a characteristic of a signal.

Hereinafter, a device, a method, and a storage medium according to embodiments of the present disclosure, when performing interpolation using weight values of some REs (e.g., REs of reception reference signals) in a sensitivity environment for a frequency and a time, such as a SIMO environment, may perform the interpolation by discriminating a scalar component (or a scalar value, a scalar element) and a vector component (or a vector component, a vector element) of each of the weight values. Accordingly, the device, the method, and the storage medium according to embodiments of the present disclosure may reduce operation complexity for weight values of other REs (e.g., REs of reception data signals). In addition, based on frequency selectivity and magnitude of the Doppler frequency, the device, the method, and the storage medium according to embodiments of the present disclosure may calculate a coefficient for reflecting a non-linear component, and may perform the interpolation by using the calculated coefficient. Accordingly, even in a case of using the interpolation, the device, the method, and the storage medium according to embodiments of the present disclosure may more accurately calculate the weight values of the other REs and may improve performance of decoding.

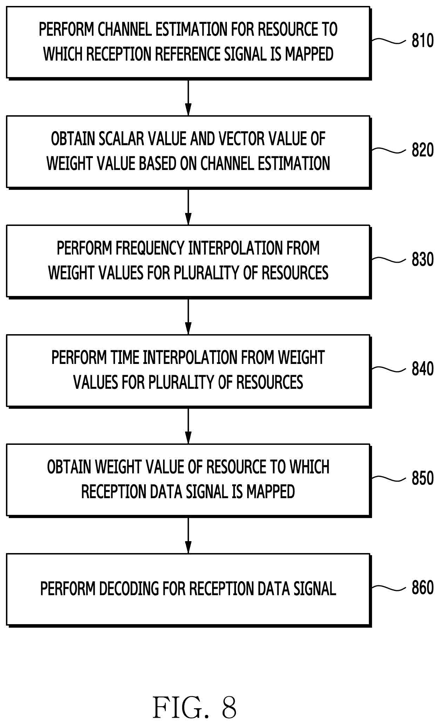

FIG. 8 illustrates an example of an operation flow of a method for obtaining a weight value for a reception data signal based on interpolation for each of a scalar component and a vector component of a weight value.

At least a portion of the method of FIG. 8 may be performed by the electronic device 300 of FIG. 3. For example, at least a portion of the method may be controlled by a processor 330 of the electronic device 300. In the following embodiment, each operation may be sequentially performed, but is not necessarily performed sequentially. For example, an order of each operation may be changed, and at least two operations may be performed in parallel.

The method of FIG. 8 assumes a case that there is one transmission antenna (or layer) of an external electronic device including the transmission end 610 of FIG. 6 and SIMO technology (or a SIMO channel) configured with a plurality of reception antennas of the electronic device 300 including the reception end 620 of FIG. 6 is used.

Although not illustrated in FIG. 8, according to an embodiment, the electronic device 300 may obtain reception signals including reception reference signals and reception data signals. For example, the electronic device 300 may directly receive the reception signals from the external electronic device. In addition, for example, the electronic device 300 (e.g., the DU 210 of FIG. 2) may receive the reception signals from another electronic device (e.g., the RU 220 of FIG. 2) that has obtained the reception signals from the external electronic device.

According to an embodiment, in operation 810, the electronic device 300 may perform channel estimation for a resource to which a reception reference signal is mapped (or allocated). For example, the electronic device 300 may perform channel estimation for each of REs to which reception reference signals are mapped (or allocated, obtained, or received). For example, the REs to which the reception reference signals are mapped may be included in a first resource region (e.g., the first resource region 701 of FIG. 7). For example, the reception reference signals may include a DMRS.

According to an embodiment, the electronic device 300 may obtain a channel vector h*^{H}*(*mᵢ*,*nⱼ*) in accordance with channel estimation for the REs of the reception reference signals. The mᵢ may indicate an index of a time resource of each of the REs of the reception reference signals. The n-ⱼ may indicate an index of a frequency resource of each of the REs of the reception reference signals. In a case that SIMO is used, the number of transmission layers is 1, and thus the channel vector h*^{H}*(mᵢ,*nⱼ*) other than a channel matrix may be obtained.

According to an embodiment, in operation 820, the electronic device 300 may obtain a scalar value and a vector value of a weight value based on the channel estimation. For example, the electronic device 300 may obtain a weight value of each of the REs to which the reception reference signals are mapped (or allocated, obtained, or received). For example, the electronic device 300 may distinguish the weight value of each of the REs to which the reception reference signals are mapped (or allocated, obtained, or received) into the scalar value and the vector value, and may obtain the distinguished scalar value and vector value. For example, the following equations may be referred to for the scalar value and the vector value obtained based on the channel estimation for each of the REs to which the reception reference signals are mapped (or allocated, obtained, or received). ${v}^{H} \left({m}_{i}, {n}_{j}\right) = {h}^{H} \left({m}_{i}, {n}_{j}\right) {R}_{nn}^{- 1}$ $s \left({m}_{i}, {n}_{j}\right) = {h}^{H} \left({m}_{i}, {n}_{j}\right) {R}_{nn}^{- 1} h \left({m}_{i}, {n}_{j}\right)$

The mᵢ may indicate a symbol of an RE to which a reception reference signal is mapped (or allocated, obtained, or received), the i may indicate an integer having a value of 0, 1, 2, ..., ${N}_{RS}^{sym} - 1$, the ${N}_{RS}^{sym}$ may indicate the number of symbols to which the reception reference signal is allocated, the nⱼ may indicate a subcarrier of an RE to which a reception reference signal is mapped (or allocated, obtained, or received), the j may indicate an integer having a value of 0, 1, 2, ..., ${N}_{RS}^{sc} - 1$, the ${N}_{RS}^{sym}$ may indicate the number of subcarriers to which the reception reference signal is allocated, the **h**(*mᵢ*,*nⱼ*) may indicate a channel vector having a size of (*Nᵣₓ* × 1), the ${R}_{nn}^{- 1}$ may indicate a noise and interference covariance matrix having a size of (*Nᵣₓ* × *Nᵣₓ*) , the *v^{H}*(*mᵢ*,*nⱼ*) which has a size of (*Nᵣₓ* × 1) may indicate a vector value (or a component) of the weight value, and the *s*(*mᵢ*,*nⱼ*) may indicate a scalar value (or a component) of the weight value. For example, the weight value may indicate a weight value of the RE to which the reception reference signal is mapped (or allocated, obtained, or received).

According to an embodiment, in operation 830, the electronic device 300 may perform frequency interpolation from weight values for a plurality of resources.

For example, the electronic device 300 may perform frequency interpolation from weight values for the REs to which the reception reference signals are mapped (or allocated, obtained, or received). In an example, the electronic device 300 may perform the frequency interpolation by using vector values *v^{H}*(*mᵢ*,*nⱼ*) of the weight values of two REs to which two reception reference signals are mapped. In addition, the electronic device 300 may perform the frequency interpolation by using scalar values *s*(*mᵢ*,*mⱼ*) of the weight values of two REs to which two reception reference signals are mapped.

In addition, for example, the electronic device 300 may perform frequency interpolation from a weight value for an RE to which one reception reference signal is mapped and a weight value for an RE to which one reception data signal is mapped. At this time, the weight value for the RE to which the reception data signal is mapped may be a value interpolated from weight values of two REs to which two reception reference signals are mapped.

In addition, for example, the electronic device 300 may perform frequency interpolation from weight values for REs to which two reception data signals are mapped. At this time, each of the weight values for the REs to which the two reception data signals are mapped may be a value interpolated from weight values of two REs to which two reception reference signals are mapped, a value interpolated from a weight value of one RE to which one reception reference signal is mapped and weight values of one RE to which one reception data signal is mapped, or a value interpolated from weight values of two REs to which two reception data signals are mapped.

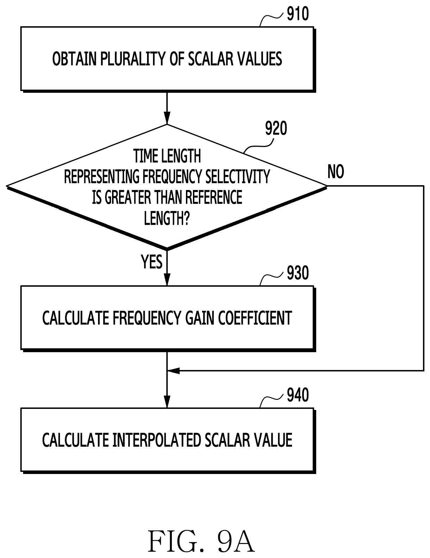

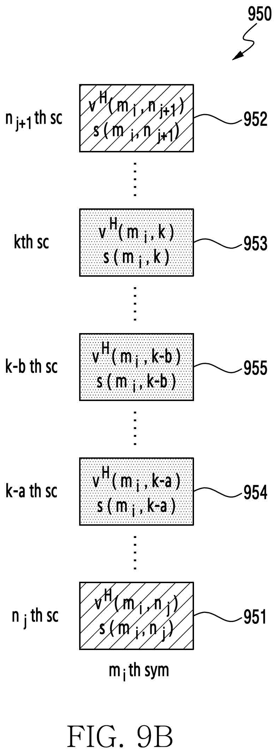

Specific details for the frequency interpolation of operation 830 related to the examples may be referenced in FIGS. 9A and 9B below.

According to an embodiment, in operation 840, the electronic device 300 may perform time interpolation from weight values for a plurality of resources.

For example, the electronic device 300 may perform time interpolation from the weight values for the REs to which the reception reference signals are mapped. In an example, the electronic device 300 may perform the time interpolation by using the vector values *v^{H}*(*mᵢ*,*nⱼ*) of the weight values of two REs to which two reception reference signals are mapped. In addition, the electronic device 300 may perform the time interpolation by using the scalar values *s*(*mᵢ*,*nⱼ*) of the weight values of two REs to which two reception reference signals are mapped.

In addition, for example, the electronic device 300 may perform time interpolation from a weight value for an RE to which one reception reference signal is mapped and a weight value for an RE to which one reception data signal is mapped. At this time, the weight value for the RE to which the reception data signal is mapped may be a value interpolated from weight values of two REs to which two reception reference signals are mapped.

In addition, for example, the electronic device 300 may perform time interpolation from weight values for REs to which two reception data signals are mapped. At this time, each of the weight values for the REs to which the two reception data signals are mapped may be a value interpolated from weight values of two REs to which two reception reference signals are mapped, a value interpolated from a weight value of one RE to which one reception reference signal is mapped and a weight value of one RE to which one reception data signal is mapped, or a value interpolated from weight values of two REs to which two reception data signals are mapped.

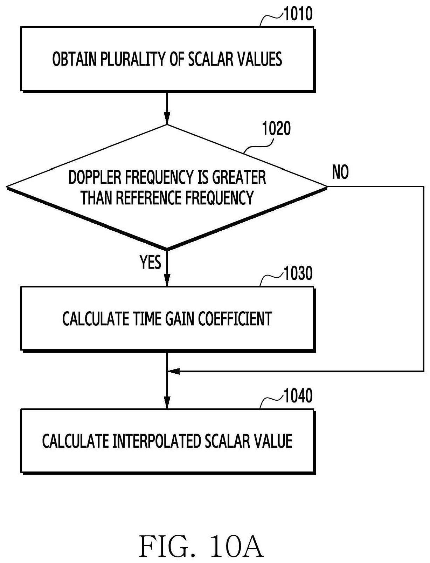

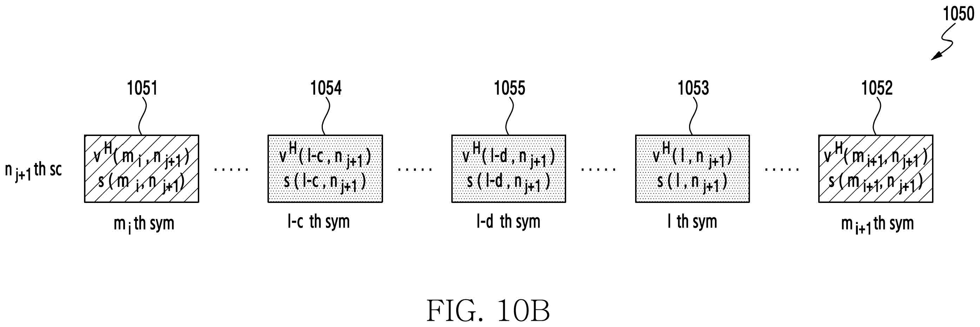

Specific details of the time interpolation of the operation 840 related to the examples may be referenced in FIGS. 10A and 10B below.

According to an embodiment, in operation 850, the electronic device 300 may obtain a weight value of a resource to which a reception data signal is mapped. For example, the electronic device 300 may obtain a weight value of an RE to which the reception data signal is mapped by performing at least one of the frequency interpolation or the time interpolation. For example, the electronic device 300 may obtain a scalar value *s*(*l,k*) and a vector value *v*(*l,k*) of the weight value of the RE to which the reception data signal is mapped, respectively.

For example, a transmission signal estimated for each of reception data signals obtained by the electronic device 300 may be defined as shown in the following equation.$\begin{matrix}\hat{x} \left(l, k\right) = \frac{1}{β \left(l, k\right)} w {\left(l, k\right)}^{H} y \left(l, k\right) \\ = \frac{{\left({h}^{H}\left(l, k\right){R}_{nn}^{- 1}h\left(l, k\right)+1\right)}^{- 1} {h}^{H} \left(l, k\right) {R}_{nn}^{- 1} y \left(l, k\right)}{{\left({h}^{H}\left(l, k\right){R}_{nn}^{- 1}h\left(l, k\right)+1\right)}^{- 1} {h}^{H} \left(l, k\right) {R}_{nn}^{- 1} h \left(l, k\right)} \\ = {\left({h}^{H}\left(l, k\right){R}_{nn}^{- 1}h\left(l, k\right)\right)}^{- 1} {h}^{H} \left(l, k\right) {R}_{nn}^{- 1} y \left(l, k\right) \\ = \frac{v \left(l, k\right)}{s \left(l, k\right)} y \left(l, k\right)\end{matrix}$

The 1 may indicate a symbol of an RE to which a reception data signal is mapped (or allocated, obtained, or received), the k may indicate a subcarrier of an RE to which a reception data signal is mapped (or allocated, obtained, or received), the *x̂*(*l*, *k*) may indicate an estimated transmission signal having a scalar value, the may *β*(*l*, *k*) indicate a gain having a scalar value, the w(*l*, *k*)*^{H}* may indicate a weight vector (or a weight value) having a size of (1 × *Nᵣₓ*), the y(*l*, *k*) may indicate a reception signal vector having a size of (*Nᵣₓ* × 1), the h(*l*, *k*) may indicate a channel vector having a size of (*Nᵣₓ* × 1), the ${R}_{nn}^{- 1}$ may indicate a noise and interference covariance matrix having a size of (*Nᵣₓ* × *Nᵣₓ*), the y(*l*, *k*) which has a size of (1 × *Nᵣₓ*) may indicate a vector value (or a component) of the weight vector w(*l*, *k*), and the *s*(*l, k*) may indicate a scalar value (or a component) of the weight vector w(*l*, *k*).

Referring to Equation 6, since each of the *β*(*l*, *k*) and the ${h}^{H} \left(l, k\right) {R}_{nn}^{- 1} h \left(l, k\right) \left(=1\times {N}_{rx}\times {N}_{rx}\times {N}_{rx}\times {N}_{rx}\times 1\right)$ has a scalar value, the estimated transmission signal may be simplified with respect to the reception signal vector y(*l*, *k*), the scalar value *s*(*l, k*) of the weight value, and the vector value y(*l*, *k*) of the weight value. For example, the scalar value *s*(*l, k*) of the weight value may be defined as ${h}^{H} \left(l, k\right) {R}_{nn}^{- 1} h \left(l, k\right)$. For example, the vector value *v*(*l*, *k*) of the weight value may be defined as ${h}^{H} \left(l, k\right) {R}_{nn}^{- 1}$.

Referring to the above description, in a case of using the Equation 6 for all REs to which the reception data signals are mapped (or allocated, obtained, or received), the electronic device 300 may calculate a weight value of each of all the REs. However, calculating a weight value of each of all the REs may have high operation complexity. Therefore, instead of calculating a weight value for each of all REs to which the reception data signals are mapped (or allocated, obtained, or received), the electronic device 300 may calculate weight values for some REs to which the reception reference signals are mapped (or allocated, obtained, or received) and may calculate weight values of the reception data signals by performing interpolation using the calculated weight values. At this time, as shown in the Equation 6, the electronic device 300 may reduce operation complexity by distinguishing a weight value into a scalar value and a vector value and by separately performing interpolation for a scalar value and a vector value of each weight value.

In other words, the electronic device 300 may obtain a vector value *v^{H}*(*mᵢ*,*mⱼ*) and a scalar value *s*(*mᵢ*,*nⱼ*) of the weight value for each of the reception reference signals and may perform interpolation by using the vector values *v^{H}*(*mᵢ*,*nⱼ*) and the scalar values *s*(*mᵢ*,*nⱼ*)**.** A vector value interpolated from the vector values *v^{H}*(*mᵢ*,*nⱼ*) may be the vector value *v*(*l*, *k*) of the reception data signal of the Equation 6. A vector value and a scalar value interpolated from the scalar values *s*(*mᵢ*,*nⱼ*) may be the scalar value *s*(*l, k*) of the reception data signal of the Equation 6.

According to an embodiment, in operation 860, the electronic device 300 may perform decoding for the reception data signal. For example, the electronic device 300 may calculate an MMSE weight (or a weight) by using the scalar value *s*(*l, k*) and the vector value *v*(*l, k*) of the weight value obtained through interpolation (e.g., the frequency interpolation and/or the time interpolation). For example, the electronic device 300 may perform the decoding of the reception data signal by using the weight.

FIG. 9A illustrates an example of an operation flow of a method for performing interpolation for weight values in a frequency domain. FIG. 9B illustrates an example of a method for performing interpolation for weight values in a frequency domain.

At least a portion of the method of FIG. 9A may be performed by the electronic device 300 of FIG. 3. For example, at least a portion of the method may be controlled by a processor 330 of the electronic device 300. In the following embodiment, each operation may be sequentially performed, but is not necessarily sequentially performed. For example, an order of each operation may be changed, and at least two operations may be performed in parallel. The method of FIG. 9A may represent an example of specific operations for the operation 830 of FIG. 8 for performing frequency interpolation.

According to an embodiment, in operation 910, the electronic device 300 may obtain a plurality of scalar values. For example, the electronic device 300 may obtain a first scalar value of a first weight value of a first RE among REs in which reception reference signals are received, and a second scalar value of a second weight value of a second RE among the REs. For example, the second RE may be located on a time resource (e.g., a symbol) of the first RE. In other words, the first RE and the second RE may be located on the same time resource (or time axis). A specific example of the first RE and the second RE may be referenced in FIG. 9B.

Referring to an example 950 of FIG. 9B, the electronic device 300 may obtain a first scalar value *s*(*mᵢ*,*nⱼ*) of the first weight value of a first RE 951 and a second scalar value *s*(*mᵢ*,*n*_{*j*+1}) of the second weight value of a second RE 952. In order to perform frequency interpolation, the first RE 951 and the second RE 952 may be located on the same time resource (e.g., an mᵢ symbol). For example, the first weight value may be calculated based on channel estimation for a reception reference signal of the first RE 951. For example, the second weight value may be calculated based on channel estimation for a reception reference signal of the second RE 952. For example, the REs including the first RE 951 and the second RE 952 may be included in the first resource region 701 of FIG. 7.

Referring back to FIG. 9A, according to an embodiment, in operation 920, the electronic device 300 may determine whether a time length representing frequency selectivity is greater than a reference length. For example, the electronic device 300 may determine whether the time length representing selectivity in a frequency domain between the first RE (e.g., the first RE 951 of FIG. 9B) and the second RE (e.g., the second RE 952 of FIG. 9B) is greater than the reference length. The following equation may be referred to for a relationship between the frequency selectivity and the reference length for the first RE 951 of FIG. 9B and the second RE 952 of FIG. 9B. $Freq . Selectivity \left({n}_{j}, {n}_{j + 1}\right) > {Th}_{f}$

The Freq.Selectivity (*nⱼ*,*n*_{*j*+1}) may indicate the time length (e.g., milliseconds (ms)) representing frequency selectivity between an nⱼ subcarrier and an nⱼ₊₁ subcarrier, and Th_{f} may indicate the reference length (or a first reference value). Complexity of the operation of the Equation 7 may be only an operation in accordance with an Nᵣₓ order, and thus may be negligibly low compared to complexity of directly operating all REs of reception data signals (an (Nᵣₓ)² order).

In a case that the time length is greater than the reference length, the electronic device 300 may recognize that it is an environment in which a channel change in accordance with a frequency is rapid in the frequency domain between the first RE and the second RE. In operation 920, in a case of determining that the time length is greater than the reference length, the electronic device 300 may perform operation 930. In contrast, in the operation 920, in a case of determining that the time length is less than or equal to the reference length, the electronic device 300 may perform operation 940.

According to an embodiment, in the operation 930, the electronic device 300 may calculate a frequency gain coefficient. For example, in a case that the time length for the frequency domain between the first RE and the second RE is greater than the reference length, the electronic device 300 may calculate the frequency gain coefficient. For example, the frequency gain coefficient may be referred to as a frequency gain or a first gain coefficient.

For example, the frequency gain coefficient may be used to compensate for a non-linear component representing a channel change in accordance with the frequency selectivity. The following equation may be referred to for the frequency gain coefficient for the first RE 951 of FIG. 9B and the second RE 952 of FIG. 9B. ${s}_{sym}^{cross} \left({m}_{i}, \left({n}_{j}, {n}_{j + 1}\right)\right) = w {\left({m}_{i}, {n}_{j}\right)}^{H} h \left({m}_{i}, {n}_{j + 1}\right) , j = 0 , … , {N}_{RS}^{sc} - 2$

The ${s}_{sym}^{cross} \left({m}_{i}, \left({n}_{j}, {n}_{j + 1}\right)\right)$ may indicate a first cross factor between an nⱼ subcarrier and an nⱼ₊₁ subcarrier of an mᵢ symbol having a scalar value, the *w*(*mᵢ*,*nⱼ*)*^{H}* may indicate a weight value (or a weight vector) of the mᵢ symbol and the nⱼ subcarrier, and the h(*mᵢ*,*n*_{*j*+1}) may indicate a channel vector of the mᵢ symbol and the nⱼ₊₁ subcarrier.

The first cross factor may be defined for a frequency resource (the nⱼ subcarrier) of the first RE 951 and a frequency resource (the nⱼ₊₁ subcarrier) of the second RE 952. For example, the frequency gain coefficient calculated from the first cross factor may be defined as shown in the following equation. ${B}_{l} \left({m}_{i}, \left({n}_{j}, {n}_{j + 1}\right)\right) = 2 Re \left({s}_{sym}^{cross}\left({m}_{i}, \left({n}_{j}, {n}_{j + 1}\right)\right){e}^{j \left({θ}_{{n}_{j + 1}}^{k}-{θ}_{{n}_{j}}^{k}\right)}\right)$

The *Bₗ*(*mᵢ*,(*nⱼ*,*n*_{*j*+1})) may indicate the frequency gain coefficient between the nⱼ subcarrier and the nⱼ₊₁ subcarrier of the mᵢ symbol, The Re(X) may indicate a real part of a complex number X, the ${s}_{sym}^{cross} \left({m}_{i}, \left({n}_{j}, {n}_{j + 1}\right)\right)$ may indicate the first cross factor between the nⱼ subcarrier and the nⱼ₊₁ subcarrier of the mᵢ symbol having a scalar value, the ${θ}_{{n}_{j}}^{k}$ may indicate a phase difference due to a time offset between the nⱼ subcarrier and a k subcarrier, and the ${θ}_{{n}_{j + 1}}^{k}$ may indicate a phase difference due to a time offset between the nⱼ₊₁ subcarrier and the k subcarrier. At this time, as in the example 950 of FIG. 9B, the k subcarrier may be a subcarrier between the nⱼ subcarrier and the nⱼ₊₁ subcarrier, and may indicate a subcarrier of a resource (e.g., a third RE 953 of FIG. 9B) that is a target of the frequency interpolation.

Referring to the above description, the electronic device 300 may calculate the frequency gain coefficient in accordance with a multiplication between the first weight value of the first RE and a channel vector of the second RE.

According to an embodiment, in the operation 940, the electronic device 300 may calculate an interpolated scalar value. Referring to the example 950 of FIG. 9B, the electronic device 300 may calculate a third scalar value *s*(*mᵢ*,*k*) of a third weight of the third RE 953 interpolated from the first scalar value *s*(*mᵢ*,*nⱼ*) of the first weight value of the first RE 951 and the second scalar value *s*(*mᵢ*,*n*_{*j*+1}) of the second weight value of the second RE 952.

For example, in a case that the time length is greater than the reference length, the electronic device 300 may calculate the interpolated third scalar value *s*(*mᵢ*,*k*) based on the first scalar value *s*(*mᵢ*,*nⱼ*), the second scalar value *s*(*mᵢ*,*n*ⱼ₊₁), and the frequency gain coefficient. In addition, for example, in a case that the time length is less than or equal to the reference length, the electronic device 300 may calculate the interpolated third scalar value *s*(*mᵢ*,*k*) based on the first scalar value *s*(*mᵢ*,*nⱼ*) and the second scalar value *s*(*mᵢ*,*n*_{*j*+1}). The interpolated third scalar value *s*(*mᵢ*,*k*) may be referred to as shown in the following equation. ${s}_{k} \left({m}_{i}, \left({n}_{j}, {n}_{j + 1}\right)\right) = \left\{\begin{matrix}{\left({α}_{{n}_{j}}^{k}\right)}^{2} s \left({m}_{i}, {n}_{j}\right) + {\left({α}_{{n}_{j + 1}}^{k}\right)}^{2} s \left({m}_{i}, {n}_{j + 1}\right) + {B}_{i} \left({m}_{i}, \left({n}_{j}, {n}_{j + 1}\right)\right) \\ {α}_{{n}_{j}}^{k} s \left({m}_{i}, {n}_{j}\right) + {α}_{{n}_{j + 1}}^{k} s \left({m}_{i}, {n}_{j + 1}\right)\end{matrix}\right.$

The *sₖ*(*mᵢ*,(*nⱼ, n*_{*j*+1})) may indicate a scalar value of the k subcarrier interpolated by the nⱼ subcarrier and the nⱼ₊₁ subcarrier of the mᵢ symbol, the ${α}_{{n}_{j}}^{k}$ and the ${α}_{{n}_{j + 1}}^{k}$ may indicate a first interpolation coefficient and a second interpolation coefficient in accordance with an interpolation method (e.g., a linear interpolation method, a cubic interpolation method, or a Wiener filter), and the *Bₗ*(*mᵢ*,(*nⱼ,n*_{*j*+1})) may indicate the frequency gain coefficient. In a case that the interpolation method is the linear interpolation method, the first interpolation coefficient and the second interpolation coefficient may be calculated as ${α}_{{n}_{j}}^{k} = \frac{{n}_{j + 1} - k}{{n}_{j + 1} - {n}_{j}}$ and ${α}_{{n}_{j + 1}}^{k} = \frac{k - {n}_{j}}{{n}_{j + 1} - {n}_{j}}$, respectively. However, an embodiment of the present disclosure is not limited thereto. Each of the first interpolation coefficient and the second interpolation coefficient may be referred to as a frequency coefficient or a frequency interpolation weight.

Referring to the Equation 10, in a case that the time length is less than or equal to the reference length, the interpolated third scalar value *s*(*mᵢ*,*k*) may be calculated by applying the first interpolation coefficient to the first scalar value and by applying the second interpolation coefficient to the second scalar value. In addition, in a case that the time length is greater than the reference length, the interpolated third scalar value *s*(*mᵢ*,*k*) may be calculated by applying a square of the first interpolation coefficient to the first scalar value and by applying a square of the second interpolation coefficient to the second scalar value. Specifically, in a case that the time length is greater than the reference length, the interpolated third scalar value *s*(*mᵢ*,*k*) may be a sum of a multiplication between the first scalar value and the square of the first interpolation coefficient, a multiplication between the second scalar value and the square of the second interpolation coefficient, and the frequency gain coefficient.

According to an embodiment, in a case that a channel change in accordance with the frequency domain is rapid, the electronic device 300 may perform frequency interpolation more accurately in consideration of a non-linear component. Referring to the Equation 10, in a case of calculating the third scalar value through the frequency interpolation, the electronic device 300 may use a non-linear component such as the square of the first interpolation coefficient, the square of the second interpolation coefficient, and the frequency gain coefficient. Accordingly, the electronic device 300 may obtain a more accurate weight value (or an MMSE weight) and may improve decoding performance for a reception data signal by using the obtained weight value.

Referring to the above description, in the example, a case that the scalar values obtained through the operation 910 are scalar values of REs (e.g., the first RE 951 and the second RE 952 of FIG. 9B) to which two reception reference signals are mapped is described, but an embodiment of the present disclosure is not limited thereto. For example, the scalar values obtained through the operation 910 may include a scalar value of an RE to which a reception reference signal is mapped and a scalar value of an RE to which a reception data signal is mapped, or scalar values of REs to which two reception data signals are mapped. Referring to the example 950 of FIG. 9B, for example, the electronic device 300 may obtain the first scalar value *s*(*mᵢ*,*nⱼ*) of the first RE 951 and the third scalar value *s*(*mᵢ*,*k*) of the third RE 953, and may calculate a fourth scalar value *s*(*mᵢ*,*k* - *a*) of a fourth RE 954 interpolated from the scalar values. In addition, for example, the electronic device 300 may obtain the third scalar value *s*(*mᵢ*,*k*) of the third RE 953 and the fourth scalar value *s*(*mᵢ*,*k* - *a*) of the fourth RE 954, and may calculate a fifth scalar value *s*(*mᵢ*,*k* - *b*) (b<a) of the fifth RE 955 interpolated from the scalar values.

In addition, in the example, for convenience of description, an example in which the electronic device 300 performs frequency interpolation for a scalar value of a weight value is described, but an embodiment of the present disclosure is not limited thereto. According to an embodiment, the electronic device 300 may obtain a plurality of vector values and may perform the frequency interpolation for the plurality of vector values. Referring to the example 950 of FIG. 9B, the electronic device 300 may obtain a first vector value *v^{H}*(*mᵢ*,*nⱼ*) of the first RE 951 and a second vector value *v^{H}*(*mᵢ,n*_{*j*+1}) of the second RE 952. For example, the electronic device 300 may calculate a third vector value *v^{H}*(*mᵢ*,*k*) of the third RE 953 interpolated from the first vector value *v^{H}*(*mᵢ*,*nⱼ*) and the second vector value *v^{H}*(*mᵢ*,*n*_{*j*+1}). Specific details for the third vector value *v^{H}*(*mᵢ*,*k*) may be referenced in the following equation. ${v}^{H} \left({m}_{i}, k\right) = {α}_{{n}_{j}}^{k} {e}^{j {θ}_{{n}_{j}}^{k}} {v}^{H} \left({m}_{i}, {n}_{j}\right) + {α}_{{n}_{j + 1}}^{k} {e}^{j {θ}_{{n}_{j + 1}}^{k}} {v}^{H} \left({m}_{i}, {n}_{j + 1}\right)$

The *v^{H}*(*mᵢ,k*) may indicate a vector value of the k subcarrier interpolated by the nⱼ subcarrier and the nⱼ₊₁ subcarrier of the mᵢ symbol, the ${α}_{{n}_{j}}^{k}$ and the ${α}_{{n}_{j + 1}}^{k}$ may indicate the first interpolation coefficient and the second interpolation coefficient in accordance with an interpolation method (e.g., a linear interpolation method, a cubic interpolation method, or a Wiener filter), the ${θ}_{{n}_{j}}^{k}$ may indicate a phase difference due to a time offset between the nⱼ subcarrier and the k subcarrier, and the ${θ}_{{n}_{j + 1}}^{k}$ may indicate a phase difference due to a time offset between the nⱼ₊₁ subcarrier and the k subcarrier.

FIG. 10A illustrates an example of an operation flow of a method for performing interpolation for weight values in a time domain. FIG. 10B illustrates an example of a method for performing interpolation for weight values in a time domain.

At least a portion of the method of FIG. 10A may be performed by the electronic device 300 of FIG. 3. For example, at least a portion of the method may be controlled by a processor 330 of the electronic device 300. In the following embodiment, each operation may be sequentially performed, but is not necessarily sequentially performed. For example, an order of each operation may be changed, and at least two operations may be performed in parallel. The method of FIG. 10A may indicate an example of specific operations for the operation 840 of FIG. 8 for performing time interpolation.

According to an embodiment, in operation 1010, the electronic device 300 may obtain a plurality of scalar values. For example, the electronic device 300 may obtain a first scalar value of a first weight value of a first RE among REs in which reception reference signals are received, and a second scalar value of a second weight value of a second RE among the REs. For example, the second RE may be located on a frequency resource (e.g., a subcarrier) of the first RE. In other words, the first RE and the second RE may be located on the same frequency resource (or frequency axis). A specific example of the first RE and the second RE may be referenced in FIG. 10B.

Referring to an example 1050 of FIG. 10B, the electronic device 300 may obtain a first scalar value *s*(*mᵢ*,*n*_{*j*+1}) of the first weight value of a first RE 1051 and a second scalar value *s*(*m*_{*i*+1},*n*_{*j*+1}) of the second weight value of a second RE 1052. In order to perform time interpolation, the first RE 1051 and the second RE 1052 may be located on the same frequency resource (e.g., an nⱼ₊₁ subcarrier). For example, the first weight value may be calculated based on channel estimation for a reception reference signal of the first RE 1051. For example, the second weight value may be calculated based on channel estimation for a reception reference signal of the second RE 1052. For example, the REs including the first RE 1051 and the second RE 1052 may be included in the first resource region 701 of FIG. 7.

Referring back to FIG. 9A, according to an embodiment, in operation 1020, the electronic device 300 may determine whether a Doppler frequency is greater than a reference frequency. For example, the electronic device 300 may determine whether the Doppler frequency in the time domain between the first RE (e.g., the first RE 1051 of FIG. 10B) and the second RE (e.g., the second RE 1052 of FIG. 10B) is greater than the reference frequency. A relationship between the Doppler frequency and the reference frequency for the first RE 1051 of FIG. 10B and the second RE 1052 of FIG. 10B may be referenced in the following equation. $Doppler Freq . \left({m}_{i}, {m}_{i + 1}\right) > {Th}_{t}$

The Doppler Freq. (*mᵢ*,*m*_{*i*+1}) may indicate a Doppler frequency (e.g., hertz (Hz)) between an mᵢ symbol and an mᵢ₊₁ symbol of an nⱼ₊₁ subcarrier, and the Thₜ may indicate the reference frequency (or a second reference value). Complexity of the operation of the Equation 12 may be only an operation in accordance with an Nᵣₓ order, and thus may be negligibly low compared to complexity of directly operating all REs of reception data signals (an (Nᵣₓ)² order).

In a case that the Doppler frequency is greater than the reference frequency, the electronic device 300 may recognize that it is an environment in which a channel change in accordance with a time is rapid in a time domain between the first RE and the second RE. In operation 1020, in a case of determining that the Doppler frequency is greater than the reference frequency, the electronic device 300 may perform operation 1030. In contrast, in operation 1020, in a case of determining that the Doppler frequency is equal to or less than the reference frequency, the electronic device 300 may perform operation 1040.

According to an embodiment, in the operation 1030, the electronic device 300 may calculate a time gain coefficient. For example, in a case that the Doppler frequency for the time domain between the first RE and the second RE is greater than the reference frequency, the electronic device 300 may calculate the time gain coefficient. For example, the time gain coefficient may be referred to as a time gain or a second gain coefficient.

For example, the time gain coefficient may be used to compensate for a non-linear component representing a channel change in accordance with the Doppler frequency. The time gain coefficient for the first RE 1051 of FIG. 10B and the second RE 1052 of FIG. 10B may be referenced in the following equation. ${s}_{sc}^{cross} \left(\left({m}_{i}, {m}_{i + 1}\right), {n}_{j + 1}\right) = w {\left({m}_{i}, {n}_{j + 1}\right)}^{H} h \left({m}_{i + 1}, {n}_{j + 1}\right) , i = 0 , … , {N}_{RS}^{sym} - 2$

The ${s}_{sc}^{cross} \left(\left({m}_{i}, {m}_{i + 1}\right), {n}_{j + 1}\right)$ may indicate a second cross factor, having a scalar value, between the mᵢ symbol and the mᵢ₊₁ symbol of the nⱼ₊₁ subcarrier, the w(*mᵢ*,*n*_{*j*+1})*^{H}* may indicate a weight value (or weight vector) of the mᵢ symbol and the nⱼ₊₁ subcarrier, and the h(*m*_{*i*+1},*n*_{*j*+1}) may indicate a channel vector of the mᵢ₊₁ symbol and the nⱼ₊₁ subcarrier.

The second cross factor may be defined for a time resource (the mᵢ symbol) of the first RE 1051 and a time resource (the mᵢ₊₁ symbol) of the second RE 1052. For example, the time gain coefficient calculated from the second cross factor may be defined as in the following equation. ${B}_{k} \left(\left({m}_{i}, {m}_{i + 1}\right), {n}_{j + 1}\right) = 2 {α}_{{m}_{i}}^{l} {α}_{{m}_{i + 1}}^{l} Re \left({s}_{sc}^{cross}\left(\left({m}_{i}, {m}_{i + 1}\right), {n}_{j + 1}\right){e}^{j \left({θ}_{{m}_{i + 1}}^{l}-{θ}_{{m}_{i}}^{l}\right)}\right)$

The *Bₖ*(*mᵢ*,*m*_{*i*+1}),*n*_{*j*+1}) may indicate the time gain coefficient between the mᵢ symbol and the mᵢ₊₁ symbol of the nⱼ₊₁ subcarrier, the Re(X) may indicate a real part of a complex number X, the ${α}_{{m}_{i}}^{l}$ and the ${α}_{{m}_{i + 1}}^{l}$ may indicate a third interpolation coefficient and a fourth interpolation coefficient in accordance with an interpolation method (e.g., a linear interpolation method, a cubic interpolation method, or a Wiener filter), the ${s}_{sc}^{cross} \left(\left({m}_{i}, {m}_{i + 1}\right), {n}_{j + 1}\right)$ may indicate the second cross factor, having a scalar value, between the mᵢ symbol and the mᵢ₊₁ symbol of the nⱼ₊₁ subcarrier, the ${θ}_{{m}_{i}}^{l}$ may indicate a phase difference due to a time offset between the mᵢ symbol and an 1 symbol, and the ${θ}_{{m}_{i + 1}}^{l}$ may indicate a phase difference due to a time offset between the mᵢ₊₁ symbol and the 1 symbol. At this time, as in the example 1050 of FIG. 10B, the 1 symbol is a symbol between the mᵢ symbol and the mᵢ₊₁ symbol, and may indicate a symbol of a resource (e.g., a third RE 1053 of FIG. 10B) that is a target of the time interpolation. Each of the third interpolation coefficient and the fourth interpolation coefficient may be referred to as a frequency coefficient or a frequency interpolation weight.

Referring to the above description, the electronic device 300 may calculate the time gain coefficient in accordance with a multiplication between the first weight value of the first RE and a channel vector of the second RE.

According to an embodiment, in the operation 1040, the electronic device 300 may calculate an interpolated scalar value. Referring to the example 1050 of FIG. 10B, the electronic device 300 may calculate a third scalar value *s*(*l*,*n*_{*j*+1}) of a third weight of the third RE 1053 interpolated from the first scalar value *s*(*mᵢ*,*n*_{*j*+1}) of the first weight value of the first RE 1051 and the second scalar value *s*(*m*_{*i*+1},*n*_{*j*+1}) of the second weight value of the second RE 1052.

For example, in a case that the Doppler frequency is greater than the reference frequency, the electronic device 300 may calculate the interpolated third scalar value *s*(*l*,*n*_{*j*+1}) based on the first scalar value *s*(*mᵢ*,*n*_{*j*+1}), the second scalar value *s*(*m*_{*i*+1},*n*_{*j*+1}), and the time gain coefficient. In addition, for example, in a case that the Doppler frequency is equal to or less than the reference frequency, the electronic device 300 may calculate the interpolated third scalar value *s*(*l*,*n*_{*j*+1}) based on the first scalar value *s*(*mᵢ*,*n*_{*j*+1}) and the second scalar value *s*(*m*ᵢ₊₁,*n*_{*j*+1}). The interpolated third scalar value *s*(*l,n*_{*j*+1}) may be referred to as in the following equation. $\begin{matrix}{s}_{l} \left(\left({m}_{i}, {m}_{i + 1}\right), {n}_{j + 1}\right) \\ = \left\{\begin{matrix}{\left({α}_{{m}_{i}}^{l}\right)}^{2} s \left({m}_{i}, {n}_{j + 1}\right) + {\left({α}_{{m}_{i + 1}}^{l}\right)}^{2} s \left({m}_{i + 1}, {n}_{j + 1}\right) + {B}_{k} \left(\left({m}_{i}, {m}_{i + 1}\right), {n}_{j + 1}\right) \\ {α}_{{m}_{i}}^{l} s \left({m}_{i}, {n}_{j + 1}\right) + {α}_{{m}_{i + 1}}^{l} s \left({m}_{i + 1}, {n}_{j + 1}\right)\end{matrix}\right.\end{matrix}$

The *sₗ*((*mᵢ*,*m*_{*i*+1}),*n*_{*j*+1}) may indicate a scalar value of the 1 symbol interpolated by the mᵢ symbol and the mᵢ₊₁ symbol of the nⱼ₊₁ subcarrier, the ${α}_{{m}_{i}}^{l}$ and the ${α}_{{m}_{i + 1}}^{l}$ may indicate the third interpolation coefficient and the fourth interpolation coefficient in accordance with an interpolation method (e.g., a linear interpolation method, a cubic interpolation method, or a Wiener filter), and the *Bₖ*((*mᵢ*,*m*_{*i*+1}),*n*_{*j*+1}) may indicate the time gain coefficient between the mᵢ symbol and the mᵢ₊₁ symbol of the nⱼ₊₁ subcarrier.

Referring to the Equation 15, in a case that the Doppler frequency is equal to or less than the reference frequency, the interpolated third scalar value *s*(*l*,*n*_{*j*+1}) may be calculated by applying the third interpolation coefficient to the first scalar value and by applying the fourth interpolation coefficient to the second scalar value. In addition, in a case that the Doppler frequency is greater than the reference frequency, the interpolated third scalar value *s*(*l*,*n*_{*j*+1}) may be calculated by applying a square of the third interpolation coefficient to the first scalar value and by applying a square of the fourth interpolation coefficient to the second scalar value. Specifically, in a case that the Doppler frequency is greater than the reference frequency, the interpolated third scalar value *s*(*l,n*_{*j*+1}) may be a sum of a multiplication between the first scalar value and the square of the third interpolation coefficient, a multiplication between the second scalar value and the square of the fourth interpolation coefficient, and the time gain coefficient.

According to an embodiment, in a case that a channel change in accordance with a time domain is rapid, the electronic device 300 may perform time interpolation more accurately by considering a non-linear component. Referring to the Equation 15, in a case of calculating the third scalar value through the time interpolation, the electronic device 300 may use a non-linear component such as a square of the first interpolation coefficient, a square of the second interpolation coefficient, and the time gain coefficient. Accordingly, the electronic device 300 may obtain a more accurate weight value (or an MMSE weight), and may improve decoding performance for a reception data signal by using the obtained weight value.

Referring to the above description, in the example, a case that the scalar values obtained through the operation 1010 are scalar values of REs (e.g., the first RE 1051 and the second RE 1052 of FIG. 10B) to which two reception reference signals are mapped is described, but an embodiment of the present disclosure is not limited thereto. For example, the scalar values obtained through the operation 1010 may include a scalar value of an RE to which a reception reference signal is mapped and a scalar value of an RE to which a reception data signal is mapped, or scalar values of REs to which two reception data signals are mapped. Referring to the example 1050 of FIG. 10B, for example, the electronic device 300 may obtain the first scalar value s(*mᵢ*,*n*_{*j*+1}) of the first RE 1051 and the third scalar value *s*(*l*,*n*_{*j*+1}) of the third RE 1053, and may calculate a fourth scalar value *s*(*l* - *c*,*n*_{*j*+1}) of a fourth RE 1054 interpolated from the scalar values. In addition, for example, the electronic device 300 may obtain the third scalar value *s*(*l*,*n*_{*j*+1}) of the third RE 1053 and the fourth scalar value *s*(*l* - *c,n*_{*j*+1}) of the fourth RE 1054, and may calculate a fifth scalar value *s*(*l - d*,*n*_{*j*+1}) (d<c) of a fifth RE 1055 interpolated from the scalar values.

In addition, in the example, for convenience of description, an example in which the electronic device 300 performs time interpolation for a scalar value of a weight value is described, but an embodiment of the present disclosure is not limited thereto. According to an embodiment, the electronic device 300 may obtain a plurality of vector values and may perform the frequency interpolation for the plurality of vector values. Referring to the example 1050 of FIG. 10B, the electronic device 300 may obtain a first vector value *v^{H}*(*mᵢ*,*n*_{*j*+1}) of the first RE 1051 and a second vector value *v^{H}*(*mᵢ* + 1,*n*_{*j*+1}) of the second RE 1052. For example, the electronic device 300 may calculate a third vector value *v^{H}*(*l*,*n*_{*j*+1}) of the third RE 1053 interpolated from the first vector value *v^{H}*(*mᵢ*,*n*_{*j*+1}) and the second vector value *v^{H}*(*mᵢ +* 1,*n*_{*j*+1}). Specific details for the third vector value *v^{H}*(*l,n*_{*j*+1}) may be referenced in the following equation. ${v}^{H} \left(l, {n}_{j + 1}\right) = {α}_{{m}_{i}}^{l} {e}^{j {θ}_{{m}_{i}}^{l}} {v}^{H} \left({m}_{i}, {n}_{j + 1}\right) + {α}_{{m}_{i + 1}}^{l} {e}^{j {θ}_{{m}_{i + 1}}^{l}} {v}^{H} \left({m}_{i + 1}, {n}_{j + 1}\right)$

The *v^{H}*(*l*,*n*_{*j*+1}) may indicate a vector value of the l symbol interpolated by interpolated by the mᵢ symbol and the mᵢ₊₁ symbol of the nⱼ₊₁ subcarrier, the ${α}_{{m}_{i}}^{l}$ and the ${α}_{{m}_{i + 1}}^{l}$ may indicate the third interpolation coefficient and the fourth interpolation coefficient in accordance with an interpolation method (e.g., a linear interpolation method, a cubic interpolation method, or a Wiener filter), the ${θ}_{{m}_{i}}^{l}$ may indicate a phase difference due to a time offset between the mᵢ symbol and the l symbol, and the ${θ}_{{m}_{i + 1}}^{l}$ may indicate a phase difference due to a time offset between the mᵢ₊₁ symbol and the l symbol.

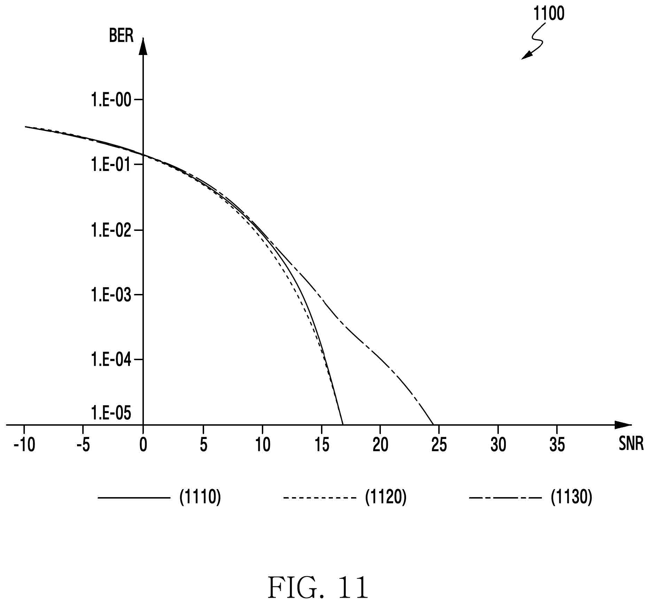

FIG. 11 illustrates an example of a graph representing a bit error rate (BER) in accordance with a method for calculating a weight value. The BER may be calculated by the electronic device 300 of FIG. 3 including the reception end 620 of FIG. 6.

FIG. 11 illustrates a graph 1100 including a first line 1110 representing a method using interpolation of each of a scalar value and a vector value of a weight value for an RE to which a reception reference signal is mapped, a second line 1120 representing a method using interpolation of a weight value for an RE to which a reception reference signal is mapped, and a third line 1130 representing a method for directly calculating a weight value for an RE to which a reception data signal is mapped, in order to calculate a weight value of a reception data signal. A horizontal axis of the graph 1100 may indicate an SNR (unit: decibel [dB]), and a vertical axis may indicate a BER.

Referring to the graph 1100, the first line 1110 and the second line 1120 may have a BER value (performance of the receiver 620 calculating an MMSE weight) in accordance with substantially the same SNR. In contrast, the third line 1130 may have a BER value different from the first line 1110 and the second line 1120 as the SNR increases.

Referring to the above description, according to embodiments of the present disclosure, the first line 1110 for calculating an MMSE weight of REs to which reception data signals are mapped by individually interpolating a scalar value and a vector value of an MMSE weight for REs to which reception reference signals are mapped may have performance substantially similar to the second line 1120 for calculating an MMSE weight for each of REs to which reception data signals are mapped.

According to embodiments of the present disclosure, the first line 1110 may have lower operation complexity than the second line 1120. For example, in terms of floating point operations (FLOPs), operation complexity of the operation 820 of FIG. 8 for calculating a scalar value and a vector value of a weight value for an RE of a reception reference signal may be $O \left({N}_{rx}^{2}{N}_{RS}^{sc}{N}_{RS}^{sym}\right)$, operation complexity of the operation 830 of FIG. 8 (or the operations of FIG. 9A) for performing frequency interpolation for each of the scalar value and the vector value may be $O \left({N}_{rx}{N}_{RS}^{sym}{N}_{Data}^{sc}\right)$, and operation complexity of the operation 840 of FIG. 8 (or the operations of FIG. 10A) for performing time interpolation for each of the scalar value and the vector value may be $O \left({N}_{rx}{N}_{Data}^{sym}{N}_{Data}^{sc}\right)$. The ${N}_{RS}^{sc}$ may indicate the number of subcarriers to which a reception reference signal is mapped, the ${N}_{RS}^{sym}$ may indicate the number of symbols to which a reception reference signal is mapped, the ${N}_{Data}^{sc}$ may indicate the number of subcarriers to which a reception data signal is mapped, and the ${N}_{Data}^{sym}$ may indicate the number of symbols to which a reception data signal is mapped. As the number of reception antennas increases in SIMO, substantial operation complexity may be determined by ${N}_{rx}^{2}$. In contrast, operation complexity for calculating a weight value for each of all REs to which reception data signals are mapped, as in the second line 1120, may be $O \left({N}_{rx}^{2}{N}_{RS}^{sym}{N}_{Data}^{sc}\right)$.

Therefore, according to embodiments of the present disclosure, operation complexity of the first line 1110 is substantially determined by $O \left({N}_{rx}^{2}{N}_{RS}^{sc}{N}_{RS}^{sym}\right)$, and operation complexity of the second line 1120 may be determined by $O \left({N}_{rx}^{2}{N}_{Data}^{sym}{N}_{Data}^{sc}\right)$. At this time, based on one slot, the number of symbols to which a reception reference signal (e.g., DMRS) is mapped is 1/6 of the number of symbols to which a data signal is mapped, and thus the operation complexity of the first line 1110 may be reduced by 1/6 of the operation complexity of the second line 1120.

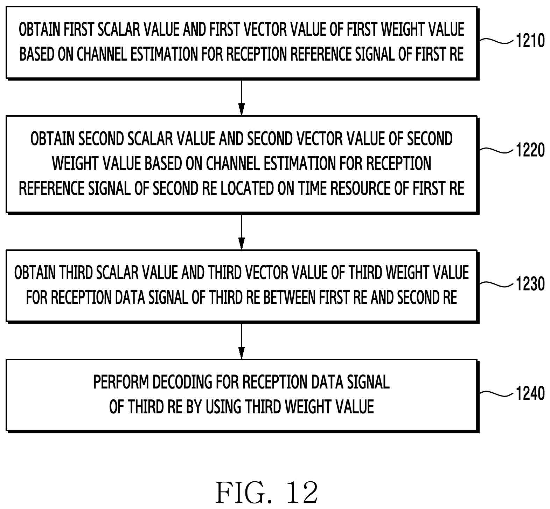

FIG. 12 illustrates an example of an operation flow of a method for obtaining a weight value for a reception data signal based on interpolation for a scalar component and a vector component of each of weight values, and performing decoding of the reception data signal.

At least a portion of the method of FIG. 12 may be performed by the DU 210 of FIG. 2. For example, at least a portion of the method may be controlled by a processor 330 of the DU 210. In the following embodiment, each operation may be sequentially performed, but is not necessarily sequentially performed. For example, an order of each operation may be changed, and at least two operations may be performed in parallel.

Although not illustrated in FIG. 12, the DU 210 may obtain, from an RU 220, reception signals mapped to (or allocated to, received in, or obtained in) a plurality of resources. For example, the reception signals may include reception reference signals mapped to REs of a first resource region among the plurality of resources and reception data signals mapped to REs of a second resource region among the plurality of resources. For example, each of the reception reference signals may include a DMRS. For example, the reception signals may be signals transmitted from a terminal 120 to the RU 220 and received by the RU 220. At this time, the terminal 120, the RU 220, and the DU 210 may use (or provide) SIMO.

According to an embodiment, in operation 1210, the DU 210 may obtain a first scalar value and a first vector value of a first weight value based on channel estimation for a reception reference signal of a first RE. For example, the DU 210 may obtain a first channel vector in accordance with channel estimation for the reception signal of the first RE. For example, the DU 210 may calculate the first scalar value and the first vector value of the first weight value, respectively, based on the first channel vector.

According to an embodiment, in operation 1220, the DU 210 may obtain a second scalar value and a second vector value of a second weight value based on channel estimation for a reception reference signal of a second RE located on a time resource of the first RE. For example, the second RE may be located on the time resource (e.g., a symbol) of the first RE. In other words, the first RE and the second RE may be located on the same time resource (or time axis). For example, the DU 210 may obtain a second channel vector in accordance with channel estimation for the reception signal of the second RE. For example, the DU 210 may calculate the second scalar value and the second vector value of the second weight value, respectively, based on the second channel vector.

For example, the first RE and the second RE may be included in the first resource region. The reception reference signal of the first RE and the reception reference signal of the second RE may be included in the reception reference signals.

According to an embodiment, in operation 1230, the DU 210 may obtain a third scalar value and a third vector value of a third weight value for a reception data signal of a third RE between the first RE and the second RE. For example, the DU 210 may obtain the third weight value by performing frequency interpolation from the first weight value of the first RE and the second weight value of the second RE. For example, the DU 210 may calculate the third scalar value interpolated for a frequency from the first scalar value of the first weight value and the second scalar value of the second weight value. For example, the DU 210 may calculate the third vector value interpolated for a frequency from the first vector value of the first weight value and the second vector value of the second weight value.

For example, the third RE may be included in the second resource region. For example, the reception data signal mapped to the third RE may be included in the reception data signals.

Although not illustrated in FIG. 12, according to an embodiment, the DU 210 may determine whether a time length representing frequency selectivity is greater than a reference length. For example, an electronic device 300 may determine whether the time length representing selectivity in a frequency domain between the first RE and the second RE is greater than the reference length.

In a case that the time length is greater than the reference length, the electronic device 300 may recognize that it is an environment in which a channel change in accordance with a frequency is rapid in the frequency domain between the first RE and the second RE. According to an embodiment, the electronic device 300 may calculate a frequency gain coefficient. For example, in a case that the time length for the frequency domain between the first RE and the second RE is greater than the reference length, the electronic device 300 may calculate the frequency gain coefficient. For example, the frequency gain coefficient may be used to compensate for a non-linear component representing a channel change in accordance with the frequency selectivity. Equation 7 to Equation 9 may be referred to for specific details related thereto.

According to an embodiment, in a case that the time length is equal to or less than the reference length, the interpolated third scalar value may be calculated by applying a first interpolation coefficient to the first scalar value and by applying a second interpolation coefficient to the second scalar value. In addition, in a case that the time length is greater than the reference length, the interpolated third scalar value may be calculated by applying a square of the first interpolation coefficient to the first scalar value and by applying a square of the second interpolation coefficient to the second scalar value. Specifically, in a case that the time length is greater than the reference length, the interpolated third scalar value may be a sum of a multiplication between the first scalar value and the square of the first interpolation coefficient, a multiplication between the second scalar value and the square of the second interpolation coefficient, and the frequency gain coefficient. Equation 10 may be referred to for specific details related thereto.

According to an embodiment, the interpolated third vector value may be calculated by applying the first interpolation coefficient to the first scalar value and by applying the second interpolation coefficient to the second scalar value. Equation 11 may be referred to for specific details related thereto.

According to an embodiment, in operation 1240, the DU 210 may perform decoding for the reception data signal of the third RE by using the third weight value. For example, the DU 210 may perform the decoding for the reception data signal of the third RE by using the third weight value determined (or frequency-interpolated) based on the third scalar value and the third vector value.

Although not illustrated in FIG. 12, according to an embodiment, the DU 210 may perform time interpolation. For example, the DU 210 may obtain a fourth scalar value and a fourth vector value of a fourth weight value based on channel estimation for a reception reference signal of a fourth RE. For example, the fourth RE may be located on a frequency resource (e.g., a subcarrier) of the first RE. In other words, the first RE and the fourth RE may be located on the same frequency resource (or frequency axis).

According to an embodiment, the DU 210 may obtain a fifth scalar value and a fifth vector value of a fifth weight value for a reception data signal of a fifth RE between the first RE and the fourth RE. For example, the DU 210 may obtain the fifth weight value by performing time interpolation from the first weight value of the first RE and the fourth weight value of the fourth RE. For example, the DU 210 may calculate the fifth scalar value interpolated for time from the first scalar value of the first weight value and the fourth scalar value of the fourth weight value. For example, the DU 210 may calculate the fifth vector value interpolated for time from the first vector value of the first weight value and the fourth vector value of the fourth weight value.

For example, the fifth RE may be included in the second resource region. For example, the reception data signal mapped to the fifth RE may be included in the reception data signals.

According to an embodiment, the DU 210 may determine whether a Doppler frequency is greater than a reference frequency. For example, the electronic device 300 may determine whether the Doppler frequency in a time domain between the first RE and the fourth RE is greater than the reference frequency.

In a case that the Doppler frequency is greater than the reference frequency, the electronic device 300 may recognize that it is an environment in which a channel change in accordance with a time is rapid in the time domain between the first RE and the fourth RE. According to an embodiment, the electronic device 300 may calculate a time gain coefficient. For example, in a case that the Doppler frequency for the time domain between the first RE and the fourth RE is greater than the reference frequency, the electronic device 300 may calculate the time gain coefficient. For example, the time gain coefficient may be used to compensate for a non-linear component representing a channel change in accordance with the Doppler frequency. Equation 12 to Equation 14 may be referred to for specific details related thereto.

According to an embodiment, in a case that the Doppler frequency is equal to or less than the reference frequency, the interpolated fifth scalar value may be calculated by applying a third interpolation coefficient to the first scalar value and by applying a fourth interpolation coefficient to the fourth scalar value. In addition, in a case that the Doppler frequency is greater than the reference frequency, the interpolated fifth scalar value may be calculated by applying a square of the third interpolation coefficient to the first scalar value and by applying a square of the fourth interpolation coefficient to the fourth scalar value. Specifically, in a case that the Doppler frequency is greater than the reference frequency, the interpolated third scalar value *s*(*l*,*n*_{*j*+1}) may be a sum of a multiplication between the first scalar value and the square of the third interpolation coefficient, a multiplication between the fourth scalar value and the square of the fourth interpolation coefficient, and the time gain coefficient. Equation 15 may be referred to for specific details related thereto.

According to an embodiment, the interpolated third vector value may be calculated by applying the third interpolation coefficient to the first scalar value and by applying the fourth interpolation coefficient to the fourth scalar value. Equation 16 may be referred to for specific details related thereto.

Although not described in FIG. 12, according to an embodiment, the DU 210 may perform frequency interpolation and time interpolation from a weight value for an RE to which one reception reference signal is mapped and a weight value for an RE to which one reception data signal is mapped. At this time, the weight value for the RE to which the reception data signal is mapped may be a value interpolated from weight values of two REs to which two reception reference signals are mapped.

In addition, according to an embodiment, the DU 210 may perform frequency interpolation and time interpolation from weight values for REs to which two reception data signals are mapped. At this time, each of the weight values for the REs to which the two reception data signals are mapped may be a value interpolated from weight values of two REs to which two reception reference signals are mapped, a value interpolated from a weight value of one RE to which one reception reference signal is mapped and weight values of one RE to which one reception data signal is mapped, or a value interpolated from weight values of two REs to which two reception data signals are mapped.

Referring to FIGS. 1A to 12, a device, a method, and a storage medium according to embodiments of the present disclosure, when performing interpolation using weight values of some REs (e.g., REs of reception reference signals) in a sensitivity environment for a frequency and a time in a SIMO environment, may perform the interpolation by discriminating a scalar component (or a scalar value) and a vector component (or a vector component) of each of the weight values. Accordingly, the device, the method, and the storage medium according to embodiments of the present disclosure may reduce operation complexity for a weight value of other REs (e.g., REs of reception data signals). In addition, the device, the method, and the storage medium according to embodiments of the present disclosure may calculate a coefficient for reflecting a non-linear component based on frequency selectivity and a magnitude of a Doppler frequency, and may perform the interpolation by using the calculated coefficient. Accordingly, even in a case of using the interpolation, the device, the method, and the storage medium according to embodiments of the present disclosure may more accurately calculate weight values of the other REs and may improve performance of decoding.

The effects that may be obtained from the present disclosure are not limited to those described above, and any other effects not mentioned herein will be clearly understood by those having ordinary knowledge in the art to which the present disclosure belongs, from the following description.

As described above, a device of a distributed unit (DU) may comprise memory storing instructions. The device may comprise at least one processor. The instructions, when executed by the at least one processor individually or collectively, may cause the device to obtain a first scalar value and a first vector value of a first weight value based on channel estimation for a reception reference signal of a first resource element (RE). The instructions, when executed by the at least one processor individually or collectively, may cause the device to obtain a second scalar value and a second vector value of a second weight value based on channel estimation for a reception reference signal of a second RE located on a time resource of the first RE. The instructions, when executed by the at least one processor individually or collectively, may cause the device to obtain a third scalar value and a third vector value of a third weight value for a reception data signal of a third RE between the first RE and the second RE. The third scalar value may be interpolated from the first scalar value and the second scalar value. The third vector value may be interpolated from the first vector value and the second vector value. The instructions, when executed by the at least one processor individually or collectively, may cause the device to perform decoding for the reception data signal of the third RE using the third weight value.

According to an embodiment, the instructions, when executed by the at least one processor individually or collectively, may cause the device to determine whether a time length representing frequency selectivity between a frequency resource of the first RE and a frequency resource of the second RE is greater than a reference length. The instructions, when executed by the at least one processor individually or collectively, may cause the device to, in a case that the time length is less than or equal to the reference length, calculate the third scalar value interpolated from the first scalar value and the second scalar value. The instructions, when executed by the at least one processor individually or collectively, may cause the device to, in a case that the time length is greater than the reference length, calculate a frequency gain coefficient in accordance with a multiplication between the first weight value of the first RE and a channel vector of the second RE, and calculate the third scalar value interpolated from the first scalar value and the second scalar value using the frequency gain coefficient.

According to an embodiment, the third scalar value may be calculated by applying a first interpolation coefficient to the first scalar value and by applying a second interpolation coefficient to the second scalar value, in a case that the time length is less than or equal to the reference length. The third scalar value may be calculated by applying a square of the first interpolation coefficient to the first scalar value and by applying a square of the second interpolation coefficient to the second scalar value, in a case that the time length is greater than the reference length.

According to an embodiment, the third scalar value may be a sum of a multiplication between the first scalar value and the square of the first interpolation coefficient, a multiplication between the second scalar value and the square of the second interpolation coefficient, and the frequency gain coefficient, in a case that the time length is greater than the reference length. The third vector value may be calculated by applying the first interpolation coefficient to the first vector value and by applying the second interpolation coefficient to the second vector value.

According to an embodiment, the instructions, when executed by the at least one processor individually or collectively, may further cause the device to obtain a fourth scalar value and a fourth vector value of a fourth weight value based on channel estimation for a reception reference signal of a fourth RE located on a frequency resource of the first RE. The instructions, when executed by the at least one processor individually or collectively, may further cause the device to obtain a fifth scalar value and a fifth vector value of a fifth weight value for a reception data signal of a fifth RE between the first RE and the fourth RE. The fifth scalar value may be interpolated from the first scalar value and the fourth scalar value. The fifth vector value may be interpolated from the first vector value and the fourth vector value. The instructions, when executed by the at least one processor individually or collectively, may further cause the device to perform decoding for the reception data signal of the fifth RE using the fifth weight value.

According to an embodiment, the instructions, when executed by the at least one processor individually or collectively, may cause the device to determine whether a doppler frequency between the time resource of the first RE and a time resource of the fourth RE is greater than a reference frequency. The instructions, when executed by the at least one processor individually or collectively, may cause the device to, in a case that the doppler frequency is less than or equal to the reference frequency, calculate the fifth scalar value interpolated from the first scalar value and the fourth scalar value. The instructions, when executed by the at least one processor individually or collectively, may cause the device to, in a case that the doppler frequency is greater than the reference frequency, calculate a time gain coefficient in accordance with a multiplication between the first weight value of the first RE and a channel vector of the fourth RE, and calculate the fifth scalar value interpolated from the first scalar value and the fourth scalar value using the time gain coefficient.

According to an embodiment, the fifth scalar value may be calculated by applying a third interpolation coefficient to the first scalar value and by applying a fourth interpolation coefficient to the fourth scalar value, in a case that the doppler frequency is less than or equal to the reference frequency. The fifth scalar value may be calculated by applying a square of the third interpolation coefficient to the first scalar value and by applying a square of the fourth interpolation coefficient to the fourth scalar value, in a case that the doppler frequency is greater than the reference frequency.

According to an embodiment, the fifth scalar value may be a sum of a multiplication between the first scalar value and the square of the third interpolation coefficient, a multiplication between the fourth scalar value and the square of the fourth interpolation coefficient, and the time gain coefficient, in a case that the doppler frequency is greater than the reference frequency. The fifth vector value may be calculated by applying the third interpolation coefficient to the first vector value and by applying the fourth interpolation coefficient to the fourth vector value.

According to an embodiment, the DU may provide single-input multiple-output (SIMO).

According to an embodiment, each of the first weight value, the second weight value, and the third weight value may include minimum mean square error (MMSE) weight.

As described above, a method performed by a distributed unit (DU) may comprise obtaining a first scalar value and a first vector value of a first weight value based on channel estimation for a reception reference signal of a first resource element (RE). The method may comprise obtaining a second scalar value and a second vector value of a second weight value based on channel estimation for a reception reference signal of a second RE located on a time resource of the first RE. The method may comprise obtaining a third scalar value and a third vector value of a third weight value for a reception data signal of a third RE between the first RE and the second RE. The third scalar value may be interpolated from the first scalar value and the second scalar value. The third vector value may be interpolated from the first vector value and the second vector value. The method may comprise performing decoding for the reception data signal of the third RE using the third weight value.

According to an embodiment, the method may comprise determining whether a time length representing frequency selectivity between a frequency resource of the first RE and a frequency resource of the second RE is greater than a reference length. The method may comprise, in a case that the time length is less than or equal to the reference length, calculating the third scalar value interpolated from the first scalar value and the second scalar value. The method may comprise, in a case that the time length is greater than the reference length, calculating a frequency gain coefficient in accordance with a multiplication between the first weight value of the first RE and a channel vector of the second RE, and calculating the third scalar value interpolated from the first scalar value and the second scalar value using the frequency gain coefficient.

According to an embodiment, the third scalar value may be calculated by applying a first interpolation coefficient to the first scalar value and by applying a second interpolation coefficient to the second scalar value, in a case that the time length is less than or equal to the reference length. The third scalar value may be calculated by applying a square of the first interpolation coefficient to the first scalar value and by applying a square of the second interpolation coefficient to the second scalar value, in a case that the time length is greater than the reference length.

According to an embodiment, the third scalar value may be a sum of a multiplication between the first scalar value and the square of the first interpolation coefficient, a multiplication between the second scalar value and the square of the second interpolation coefficient, and the frequency gain coefficient, in a case that the time length is greater than the reference length. The third vector value may be calculated by applying the first interpolation coefficient to the first vector value and by applying the second interpolation coefficient to the second vector value.

According to an embodiment, the method may further comprise obtaining a fourth scalar value and a fourth vector value of a fourth weight value based on channel estimation for a reception reference signal of a fourth RE located on a frequency resource of the first RE. The method may further comprise obtaining a fifth scalar value and a fifth vector value of a fifth weight value for a reception data signal of a fifth RE between the first RE and the fourth RE. The fifth scalar value may be interpolated from the first scalar value and the fourth scalar value. The fifth vector value may be interpolated from the first vector value and the fourth vector value. The method may further comprise performing decoding for the reception data signal of the fifth RE using the fifth weight value.

According to an embodiment, the method may comprise determining whether a doppler frequency between the time resource of the first RE and a time resource of the fourth RE is greater than a reference frequency. The method may comprise, in a case that the doppler frequency is less than or equal to the reference frequency, calculating the fifth scalar value interpolated from the first scalar value and the fourth scalar value. The method may comprise, in a case that the doppler frequency is greater than the reference frequency, calculating a time gain coefficient in accordance with a multiplication between the first weight value of the first RE and a channel vector of the fourth RE, and calculating the fifth scalar value interpolated from the first scalar value and the fourth scalar value using the time gain coefficient.

According to an embodiment, the fifth scalar value may be calculated by applying a third interpolation coefficient to the first scalar value and by applying a fourth interpolation coefficient to the fourth scalar value, in a case that the doppler frequency is less than or equal to the reference frequency. The fifth scalar value may be calculated by applying a square of the third interpolation coefficient to the first scalar value and by applying a square of the fourth interpolation coefficient to the fourth scalar value, in a case that the doppler frequency is greater than the reference frequency.

According to an embodiment, the fifth scalar value may be a sum of a multiplication between the first scalar value and the square of the third interpolation coefficient, a multiplication between the fourth scalar value and the square of the fourth interpolation coefficient, and the time gain coefficient, in a case that the doppler frequency is greater than the reference frequency. The fifth vector value may be calculated by applying the third interpolation coefficient to the first vector value and by applying the fourth interpolation coefficient to the fourth vector value.

According to an embodiment, the DU may provide single-input multiple-output (SIMO). Each of the first weight value, the second weight value, and the third weight value may include minimum mean square error (MMSE) weight.

As described above, a non-transitory computer-readable storage medium may store one or more programs including instructions that, when executed by at least one processor of a distributed unit (DU) individually or collectively, cause the DU to obtain a first scalar value and a first vector value of a first weight value based on channel estimation for a reception reference signal of a first resource element (RE). The non-transitory computer-readable storage medium may store one or more programs including instructions that, when executed by the at least one processor of the DU individually or collectively, cause the DU to obtain a second scalar value and a second vector value of a second weight value based on channel estimation for a reception reference signal of a second RE located on a time resource of the first RE. The non-transitory computer-readable storage medium may store one or more programs including instructions that, when executed by the at least one processor of the DU individually or collectively, cause the DU to obtain a third scalar value and a third vector value of a third weight value for a reception data signal of a third RE between the first RE and the second RE. The third scalar value may be interpolated from the first scalar value and the second scalar value. The third vector value may be interpolated from the first vector value and the second vector value. The non-transitory computer-readable storage medium may store one or more programs including instructions that, when executed by the at least one processor of the DU individually or collectively, cause the DU to perform decoding for the reception data signal of the third RE using the third weight value.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A device of a distributed unit (DU) comprising:
memory storing instructions; and
at least one processor,
wherein the instructions, when executed by the at least one processor individually or collectively, cause the device to:
obtain a first scalar value and a first vector value of a first weight value based on channel estimation for a reception reference signal of a first resource element (RE);
obtain a second scalar value and a second vector value of a second weight value based on channel estimation for a reception reference signal of a second RE located on a time resource of the first RE;
obtain a third scalar value and a third vector value of a third weight value for a reception data signal of a third RE between the first RE and the second RE, wherein the third scalar value is interpolated from the first scalar value and the second scalar value, wherein the third vector value is interpolated from the first vector value and the second vector value; and
perform decoding for the reception data signal of the third RE using the third weight value.

2. The device of claim 1,
wherein the instructions, when executed by the at least one processor individually or collectively, cause the device to:
determine whether a time length representing frequency selectivity between a frequency resource of the first RE and a frequency resource of the second RE is greater than a reference length;
in a case that the time length is less than or equal to the reference length, calculate the third scalar value interpolated from the first scalar value and the second scalar value; and
in a case that the time length is greater than the reference length:
calculate a frequency gain coefficient in accordance with a multiplication between the first weight value of the first RE and a channel vector of the second RE; and
calculate the third scalar value interpolated from the first scalar value and the second scalar value using the frequency gain coefficient.

3. The device of claim 2,
wherein the third scalar value is calculated by applying a first interpolation coefficient to the first scalar value and by applying a second interpolation coefficient to the second scalar value, in a case that the time length is less than or equal to the reference length, and
wherein the third scalar value is calculated by applying a square of the first interpolation coefficient to the first scalar value and by applying a square of the second interpolation coefficient to the second scalar value, in a case that the time length is greater than the reference length.

4. The device of claim 3,
wherein the third scalar value is a sum of a multiplication between the first scalar value and the square of the first interpolation coefficient, a multiplication between the second scalar value and the square of the second interpolation coefficient, and the frequency gain coefficient, in a case that the time length is greater than the reference length, and
wherein the third vector value is calculated by applying the first interpolation coefficient to the first vector value and by applying the second interpolation coefficient to the second vector value.

5. The device of claim 1,
wherein the instructions, when executed by the at least one processor individually or collectively, cause the device further to:
obtain a fourth scalar value and a fourth vector value of a fourth weight value based on channel estimation for a reception reference signal of a fourth RE located on a frequency resource of the first RE;
obtain a fifth scalar value and a fifth vector value of a fifth weight value for a reception data signal of a fifth RE between the first RE and the fourth RE, wherein the fifth scalar value is interpolated from the first scalar value and the fourth scalar value, wherein the fifth vector value is interpolated from the first vector value and the fourth vector value; and
perform decoding for the reception data signal of the fifth RE using the fifth weight value.

6. The device of claim 5,
wherein the instructions, when executed by the at least one processor individually or collectively, cause the device to:
determine whether a doppler frequency between the time resource of the first RE and a time resource of the fourth RE is greater than a reference frequency;
in a case that the doppler frequency is less than or equal to the reference frequency, calculate the fifth scalar value interpolated from the first scalar value and the fourth scalar value; and
in a case that the doppler frequency is greater than the reference frequency:
calculate a time gain coefficient in accordance with a multiplication between the first weight value of the first RE and a channel vector of the fourth RE; and
calculate the fifth scalar value interpolated from the first scalar value and the fourth scalar value using the time gain coefficient.

7. The device of claim 6,
wherein the fifth scalar value is calculated by applying a third interpolation coefficient to the first scalar value and by applying a fourth interpolation coefficient to the fourth scalar value, in a case that the doppler frequency is less than or equal to the reference frequency, and
wherein the fifth scalar value is calculated by applying a square of the third interpolation coefficient to the first scalar value and by applying a square of the fourth interpolation coefficient to the fourth scalar value, in a case that the doppler frequency is greater than the reference frequency.

8. The device of claim 7,
wherein the fifth scalar value is a sum of a multiplication between the first scalar value and the square of the third interpolation coefficient, a multiplication between the fourth scalar value and the square of the fourth interpolation coefficient, and the time gain coefficient, in a case that the doppler frequency is greater than the reference frequency, and
wherein the fifth vector value is calculated by applying the third interpolation coefficient to the first vector value and by applying the fourth interpolation coefficient to the fourth vector value.

9. The device of claim 1,
wherein the DU provides single-input multiple-output (SIMO).

10. The device of claim 1,
wherein each of the first weight value, the second weight value, and the third weight value includes minimum mean square error (MMSE) weight.

11. A method performed by a distributed unit (DU) comprising:
obtaining a first scalar value and a first vector value of a first weight value based on channel estimation for a reception reference signal of a first resource element (RE);
obtaining a second scalar value and a second vector value of a second weight value based on channel estimation for a reception reference signal of a second RE located on a time resource of the first RE;
obtaining a third scalar value and a third vector value of a third weight value for a reception data signal of a third RE between the first RE and the second RE, wherein the third scalar value is interpolated from the first scalar value and the second scalar value, wherein the third vector value is interpolated from the first vector value and the second vector value; and
performing decoding for the reception data signal of the third RE using the third weight value.

12. The method of claim 11, the method comprising:
determining whether a time length representing frequency selectivity between a frequency resource of the first RE and a frequency resource of the second RE is greater than a reference length;
in a case that the time length is less than or equal to the reference length, calculating the third scalar value interpolated from the first scalar value and the second scalar value; and
in a case that the time length is greater than the reference length:
calculating a frequency gain coefficient in accordance with a multiplication between the first weight value of the first RE and a channel vector of the second RE; and
calculating the third scalar value interpolated from the first scalar value and the second scalar value using the frequency gain coefficient.

13. The method of claim 12,
wherein the third scalar value is calculated by applying a first interpolation coefficient to the first scalar value and by applying a second interpolation coefficient to the second scalar value, in a case that the time length is less than or equal to the reference length, and
wherein the third scalar value is calculated by applying a square of the first interpolation coefficient to the first scalar value and by applying a square of the second interpolation coefficient to the second scalar value, in a case that the time length is greater than the reference length.

14. The method of claim 13,
wherein the third scalar value is a sum of a multiplication between the first scalar value and the square of the first interpolation coefficient, a multiplication between the second scalar value and the square of the second interpolation coefficient, and the frequency gain coefficient, in a case that the time length is greater than the reference length, and
wherein the third vector value is calculated by applying the first interpolation coefficient to the first vector value and by applying the second interpolation coefficient to the second vector value.

15. A non-transitory computer-readable storage medium storing one or more programs including instructions that, when executed by at least one processor of a distributed unit (DU) individually or collectively, cause the DU to:
obtain a first scalar value and a first vector value of a first weight value based on channel estimation for a reception reference signal of a first resource element (RE);
obtain a second scalar value and a second vector value of a second weight value based on channel estimation for a reception reference signal of a second RE located on a time resource of the first RE;
obtain a third scalar value and a third vector value of a third weight value for a reception data signal of a third RE between the first RE and the second RE, wherein the third scalar value is interpolated from the first scalar value and the second scalar value, wherein the third vector value is interpolated from the first vector value and the second vector value; and
perform decoding for the reception data signal of the third RE using the third weight value.
